(19) Europäisches Patentamt
European Patent Office
Office européen des brevets

(11) **EP 3 640 118 A1**

(12) **EUROPEAN PATENT APPLICATION**
published in accordance with Art. 153(4) EPC

(43) Date of publication:
**22.04.2020 Bulletin 2020/17**

(51) Int Cl.:
***B62D 6/00*** *(2006.01)*      ***B62D 5/04*** *(2006.01)*

(21) Application number: **18866571.5**

(22) Date of filing: **12.10.2018**

(86) International application number:
**PCT/JP2018/038054**

(87) International publication number:
**WO 2019/074087 (18.04.2019 Gazette 2019/16)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **13.10.2017   JP 2017199530
10.11.2017   JP 2017217686
22.11.2017   JP 2017224604**

(71) Applicant: **NSK Ltd.
Tokyo 141-8560 (JP)**

(72) Inventor: **TSUBAKI, Takahiro
Maebashi-Shi
Gunma 371-8527 (JP)**

(74) Representative: **Luten, Martin Haaije et al
Arnold & Siedsma
Bezuidenhoutseweg 57
2594 AC The Hague (NL)**

(54) **ELECTRIC POWER STEERING DEVICE**

(57)    [Problem]

An object of the present invention is to provide an electric power steering apparatus that enables suppression of a high-frequency vibration and enhancement of followability of a motor angular velocity to a motor velocity command by using a velocity control section (for example, PI-control, PID-control) and adding a motor current compensation value to a motor current command value on the basis of a steering state signal, even when a gain of the velocity control section is made large.

[Means for solving the problem]

A steering angle control section comprises a position control section that outputs a motor velocity command value based on a first steering state signal and a target steering angle, a velocity control section that outputs a second motor current command value based on the motor velocity command value and a second steering state signal, a stabilization compensating section that outputs a third motor current command value based on a third steering state signal, and a first adding section that inputs the second motor current command value and the third motor current command value, and outputs a first addition value, and outputs a first motor current command value based on the first addition value.

FIG.14

**Description**

Technical Field

The present invention relates to an electric power steering apparatus that has an assist mode of controlling a motor which provides a steering system of a vehicle with an assist torque when a driver steers the steering system and an automatic steering mode of controlling the motor depending on a target steering angle given by the vehicle when the vehicle autonomously travels, uses a velocity control section (for example, proportional-integral (PI) control, proportional (P) control, proportional-integral-differential (PID) control, or proportional preceding type PI control), adds a motor current compensation value to a motor current command value on the basis of a motor angular velocity, and enables suppression of a high-frequency vibration and enhancement of followability of the motor angular velocity to the motor velocity command even when a gain of the velocity control section is made large. Further, the present invention relates to an electric power steering apparatus that uses filters (a steering wheel vibration eliminating section and a steering wheel damping section), and enables elimination of a vibration (a vibration originating in a spring inertia system) caused by springiness of a torsion bar and an inertia moment of a steering wheel in the automatic steering mode.

Background Art

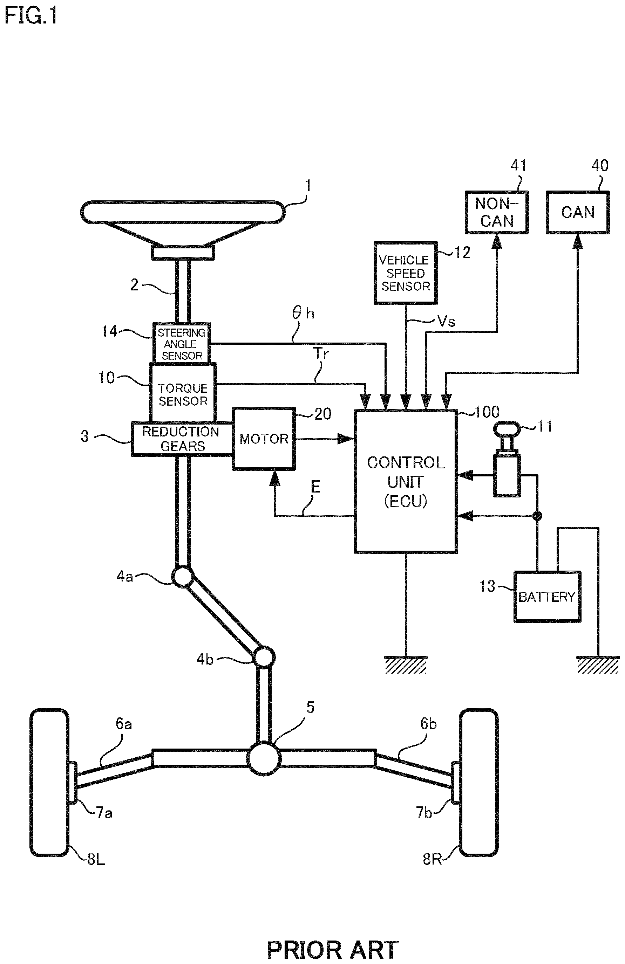

As a prior art, a general configuration of an electric power steering apparatus (EPS) will be described with reference to FIG. 1. As shown in FIG. 1, a column shaft (a steering shaft) 2 connected to a steering wheel 1 is connected to steered wheels 8L and 8R through reduction gears 3, universal joints 4a and 4b, a rack-and-pinion mechanism 5, and tie rods 6a and 6b, further via hub units 7a and 7b. In addition, a torque sensor 10 for detecting a steering torque of the steering wheel 1 and a steering angle sensor 14 for detecting a steering angle θh are provided for the column shaft 2, and a motor 20 for assisting a steering force of the steering wheel 1 is connected to the column shaft 2 through the reduction gears 3. Electric power is supplied to a control unit (ECU) 100 for controlling the electric power steering apparatus from a battery 13, and an ignition key signal is inputted into the control unit 100 through an ignition key 11. The control unit 100 calculates a steering assist command value of an assist (steering assist) command on the basis of the steering torque Tr detected by the torque sensor 10 and a vehicle speed Vs detected by a vehicle speed sensor 12, and controls a current supplied to the motor 20 by means of a voltage control value E obtained by performing compensation or the like to the steering assist command value. Moreover, the steering angle sensor 14 is not essential, it does not need to be provided, and it is possible to obtain the steering angle θh from a rotational position sensor such as a resolver connected to the motor 20.

A controller area network (CAN) 40 exchanging various information of a vehicle is connected to the control unit 100, and it is possible to receive the vehicle speed Vs from the CAN 40. Further, it is also possible to connect a non-CAN 41 exchanging a communication, analog/digital signals, a radio wave or the like except with the CAN 40 to the control unit 100.

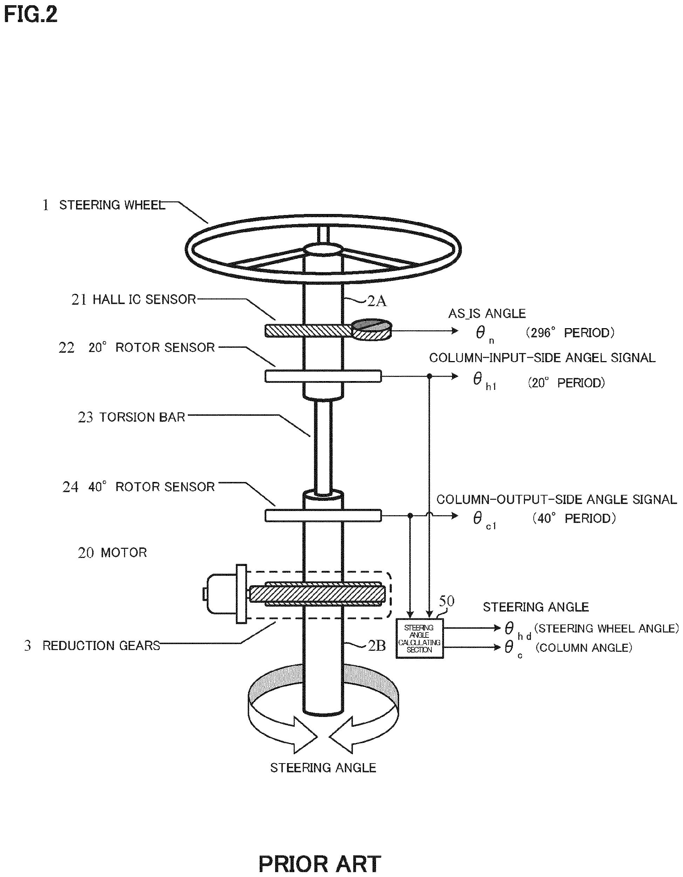

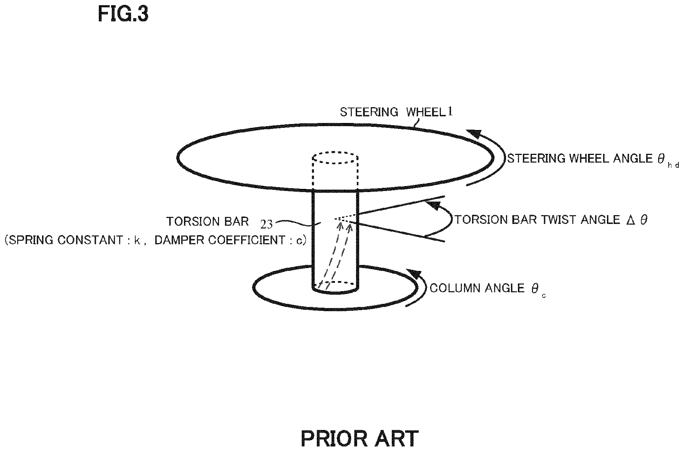

In an electric power steering apparatus which comprises a torsion bar in a column shaft (a steering wheel shaft) 2, various sensors, for example, shown in FIG. 2, are mounted on the column shaft 2 in which a torsion bar 23 is inserted, and angles are detected. That is, a Hall IC sensor 21 as an angle sensor and a 20° rotor sensor 22 on a torque sensor input side rotor are mounted on an input shaft 2A being in a steering wheel 1 side of the steering wheel shaft 2. The Hall IC sensor 21 outputs an AS_IS angle θn detected in a period of 296°. The 20° rotor sensor 22 that is mounted on a side closer to the steering wheel 1 than the torsion bar 23 outputs a column-input-side angle signal θh1 detected in a period of 20°, and the column-input-side angle signal θh1 is inputted into a steering angle calculating section 50. A 40° rotor sensor 24 on a torque sensor output side rotor is mounted on an output shaft 2B of the steering wheel shaft 2. A column-output-side angle signal θc1 is outputted from the 40° rotor sensor 24, and the column-output-side angle signal θc1 is inputted into the steering angle calculating section 50. Both the column-input-side angle signal θh1 and the column-output-side angle signal θc1 are changed to absolute angles at the steering angle calculating section 50, and a steering wheel angle θhd and a column angle θc which are absolute angles, are outputted from the steering angle calculating section 50. A mechanism diagram showing relation among a torsion bar twist angle Δθ, the steering wheel angle θhd and the column angle θc, is shown in FIG. 3.

As another prior art, it is known that an electric power steering apparatus comprising a parking assist device which facilitates double parking and parallel parking controls steering by velocity proportional-integral (PI) control with respect to a deviation between a target steering angle and a steering angle. For example, this is disclosed in Japanese Unexamined Patent Publication No. 2003-341543 A (Patent Document 1).

In an electric power steering apparatus which is provided for a vehicle having an automatic steering mode (a parking assist function) and an assist mode, it is known that a steering angle control section having a position control system including a velocity control loop system as a minor loop comprises a rate limiter for smoothing a target steering angle, and a primary or quadratic low-pass filter is used as the rate limiter. For example, this is disclosed in Japanese Unexamined Patent Publication No. 2013-252729 A (Patent Document 2) and Japanese Unexamined Patent Publication No. 2014-054885 A (Patent Document 3).

The List of Prior Art Documents

Patent Documents

Patent Document 1: Japanese Unexamined Patent Publication No. 2003-341543 A
Patent Document 2: Japanese Unexamined Patent Publication No. 2013-252729 A
Patent Document 3: Japanese Unexamined Patent Publication No. 2014-054885 A

Summary of the Invention

Problems to be Solved by the Invention

In the case that the electric power steering apparatus described in Patent Document 1 performs steering angle control in a vehicle performing steering angle following control by using the velocity PI control (proportional preceding type PI control), since response of an actual steering angle changes by a change of a vehicle speed, friction, or a road surface reaction force, the electric power steering apparatus lacks followability to the target steering angle. Further, the problem occurs that a steering wheel vibration caused by non-consideration of a spring inertia system of a steering wheel gives a driver uncomfortable feeling. Furthermore, when a gain of the velocity PI control becomes large, the problem occurs that an oscillation and a vibration in a high frequency region occurs.

Since the electric power steering apparatuses described in Patent Document 2 and Patent Document 3 comprise the rate limiter, they enable smooth steering even when the target steering angle changes rapidly, and they enable good responsiveness at a low vehicle speed. However, it is difficult to eliminate a steering wheel vibration which occurs because the design is not performed considering a resonance frequency of the spring inertia system of the steering wheel.

The present invention has been developed in view of the above-described circumstances, and an object of the present invention is to suppress a high-frequency vibration and enhance followability of a motor angular velocity to a motor velocity command by using a velocity control section (performing PI-control, proportional (P) control, proportional-integral-differential (PID) control, or proportional preceding type PI-control) and adding a motor current compensation value to a motor current command value on the basis of the motor angular velocity, even when a gain of the velocity control section is made large . Further, the object is to provide an electric power steering apparatus that enables suppression of a vibration originating in a response characteristic, and enables elimination of a vibration (a vibration originating in a spring inertia system) caused by springiness of a torsion bar and an inertia moment of a steering wheel in an automatic steering mode by using a rate limiter and a filter (a steering wheel vibration eliminating section).

Means for Solving the Problems

The above-described object of the present invention is achieved by an electric power steering apparatus that has an automatic steering mode of controlling a motor depending on a target steering angle given by a vehicle when said vehicle autonomously travels by using a steering section for steering a steering system of said vehicle, comprising: a steering angle control section that calculates a first motor current command value based on said target steering angle, a first steering state signal, a second steering state signal and a third steering state signal; wherein said steering angle control section comprises a position control section that outputs a motor velocity command value based on said first steering state signal and said target steering angle, a velocity control section that outputs a second motor current command value based on said motor velocity command value and said second steering state signal, a stabilization compensating section that outputs a third motor current command value based on said third steering state signal, and a first adding section that inputs said second motor current command value and said third motor current command value, and outputs a first addition value, and outputs said first motor current command value based on said first addition value.

The above-described object of the present invention is more effectively achieved by that wherein said first steering state signal is an actual steering angle, said second steering state signal is a motor angular velocity of said motor, and said third steering state signal is said motor angular velocity; or wherein said first steering state signal is a steering wheel angle, said second steering state signal is a motor angular velocity of said motor, and said third steering state signal is a twist torque signal; or wherein said first steering state signal is an actual steering angle, said second steering state signal is a motor angular velocity of said motor, and said third steering state signal is a column angle; or wherein said position control section multiplies a deviation between said first steering state signal and said target steering angle by a deviation gain, and outputs said motor velocity command value; or wherein said velocity control section adds an integral gain value obtained by integrating and multiplying a steering angular velocity deviation between said motor velocity command value and said second steering state signal by an integral gain, and a proportional gain value obtained by multiplying said steering angular velocity deviation by a proportional gain, and outputs said second motor velocity command value; or wherein an output limiter that limits an upper limit value and a lower limit value is provided at a final stage of said steering angle control section, and said output limiter outputs said first motor current command value; or wherein said steering angle control section further comprises a motor velocity command feedforward filter section that performs feedforward processing based on said target steering angle, and outputs a feedforward motor angular velocity command value, and a second adding section that adds an output from said position control section and said feedforward motor angular velocity command value, and outputs said motor velocity command value to said velocity control section; or wherein said steering angle control section further comprises a rate limiter that gradually changes an output value with respect to said target steering angle at a predetermined period so as to match said output value with said target steering angle; or wherein said steering angle control section further comprises a steering wheel vibration eliminating section that outputs a signal obtained by cutting off a frequency component near a predetermined center frequency in said target steering angle, to said position control section; or wherein said steering wheel vibration eliminating section cuts off a frequency component in a predetermined first cutoff frequency or less from said third steering state signal; or wherein said steering angle control section further comprises a steering wheel damping section that outputs a fourth motor current command value in a predetermined second cutoff frequency or more based on a twist torque signal, and inputs said fourth motor current command value into said first adding section; or wherein said predetermined center frequency is a frequency of a vibration caused by springiness of a torsion bar and an inertia moment of a steering wheel in said automatic steering mode; or wherein said predetermined second cutoff frequency is a frequency of a vibration caused by springiness of a torsion bar and an inertia moment of a steering wheel in said automatic steering mode; or wherein said stabilization compensating section includes a primary filter or a quadratic filter that performs filtering processing to said third steering state signal.

Effects of the Invention

The electric power steering apparatus of the present invention enables suppression of the high-frequency vibration and enhancement of the followability of the motor angular velocity to the motor velocity command by using the velocity control section (performing PI-control, P-control, PID-control, or proportional preceding type PI-control) and comprising the stabilization compensating section for adding the motor current compensation value to the motor current command value on the basis of the motor angular velocity, a torsion bar torque or the column angle, even when a gain of the velocity control section is made large . Further, the electric power steering apparatus enables elimination of a vibration originating in a response characteristic, and elimination of a vibration (a vibration originating in a spring inertia system) caused by the springiness of the torsion bar and the inertia moment of the steering wheel in the automatic steering mode by using the filters (the steering wheel vibration eliminating section and the steering wheel damping section).

Furthermore, the electric power steering apparatus extends a control band of the actual steering angle corresponding to the target steering angle to a high-frequency side by means of a motor velocity command feedforward filter (hereinafter referred to as a motor velocity command FF filter), and enables improvement of responsiveness of steering angle control.

Brief Description of the Drawings

In the accompanying drawings:

FIG. 1 is a configuration diagram illustrating a general outline of an electric power steering apparatus;
FIG. 2 is a diagram showing an example of mounting sensors and relation between a column angle and a steering wheel angle;
FIG. 3 is a mechanism diagram showing relation among a torsion bar, the steering wheel angle and the column angle;
FIG. 4 is a block diagram showing a configuration example of a control system of an electric power steering apparatus in a first embodiment of the present invention;
FIG. 5 is a block diagram showing a configuration example of a steering angle control section in the first embodiment of the present invention;
FIG. 6 is a block diagram showing an example of a rate limiter in the first embodiment of the present invention;
FIG. 7 is a block diagram showing a configuration example of a changed part setting section in the first embodiment of the present invention;
FIG. 8 is a diagram showing time variations (0 to 2 seconds) of a motor angular velocity (shown by a thin line) and a motor current command value (shown by a thick line) outputted from the steering angle control section in the case of not providing a stabilization compensating section, in the first embodiment of the present invention;

FIG. 9 is a diagram showing time variations (0 to 2 seconds) of the motor angular velocity (shown by a thin line) and the motor current command value (shown by a thick line) outputted from the steering angle control section in the case of providing the stabilization compensating section, in the first embodiment of the present invention;

FIG. 10 is a block diagram showing a configuration example of a control system of an electric power steering apparatus in a first modified example of the first embodiment of the present invention;

FIG. 11 is a block diagram showing a configuration example of a steering angle control section in the first modified example of the first embodiment of the present invention;

FIG. 12 is a block diagram showing a configuration example of a control system of an electric power steering apparatus in a second modified example of the first embodiment of the present invention;

FIG. 13 is a block diagram showing a configuration example of a steering angle control section in the second modified example of the first embodiment of the present invention;

FIG. 14 is a block diagram showing a configuration example of a steering angle control section in a second embodiment of the present invention;

FIG. 15 is a characteristic diagram showing frequency characteristics of a gain and a phase of a steering wheel vibration eliminating section in the second embodiment of the present invention (a characteristic diagram of a notch filter centered at 12.5 [Hz]);

FIG. 16 is a whole block diagram from a target steering angle θref to an actual steering angle θh in the second embodiment of the present invention;

FIG. 17 is a diagram showing transfer functions from the target steering angle to a torsion bar torque, wherein (A) shows a frequency characteristic of a gain in a conventional example, (B) shows a frequency characteristic of a gain of a transfer function in the first embodiment of the present invention, (C) shows a frequency characteristic of a phase in the conventional example, and (D) shows a frequency characteristic of a phase of the transfer function in the first embodiment of the present invention;

FIG. 18 is a diagram showing time responses of the torsion bar torque, wherein waveform (A) shows a time response of the torsion bar torque without the steering wheel vibration eliminating section, and waveform (B) shows a time response of the torsion bar torque with the steering wheel vibration eliminating section;

FIG. 19 is a diagram showing time responses of the actual steering angle, wherein waveform (A) shows a time response of the actual steering angle following the target steering angle without the steering wheel vibration eliminating section, waveform (B) shows a time response of the actual steering angle following the target steering angle with the steering wheel vibration eliminating section, and waveform (C) shows a time response of the target steering angle;

FIG. 20 is a block diagram showing a configuration example of a steering angle control section in a third modified example of the second embodiment of the present invention;

FIG. 21 is a block diagram showing a configuration example of a steering angle control section in a fourth modified example of the second embodiment of the present invention;

FIG. 22 is a block diagram showing a configuration example of a control system of an electric power steering apparatus in a third embodiment of the present invention;

FIG. 23 is a block diagram showing a configuration example of a steering angle control section in the third embodiment of the present invention;

FIG. 24A is a diagram showing a frequency characteristic of a gain in a steering wheel damping section, and FIG. 24B is a diagram showing a frequency characteristic of a phase in the steering wheel damping section;

FIG. 25 is a whole block diagram from the target steering angle θref to the actual steering angle θh in the third embodiment of the present invention;

FIG. 26 is a whole block diagram obtained by an equivalent transformation of the whole block diagram from the target steering angle θref to the actual steering angle θh in the third embodiment of the present invention;

FIG. 27 is a whole block diagram obtained by an equivalent transformation of the whole block diagram from the target steering angle θref to the actual steering angle θh in the third embodiment of the present invention;

FIG. 28 is a diagram showing time responses of the actual steering angle, wherein waveform (A) shows a time response of the target steering angle, waveform (B) shows a time response of the actual steering angle θh in the case of inputting the target steering angle, and waveform (C) shows a time response of the actual steering angle θh with both the steering wheel damping section and the steering wheel vibration eliminating section;

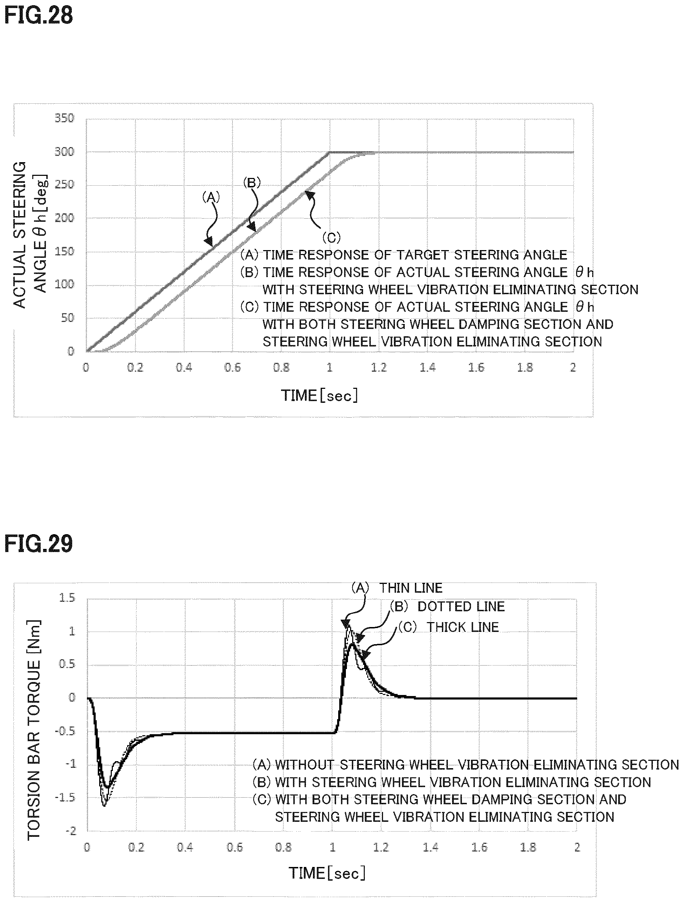

FIG. 29 is a diagram showing time responses of the actual steering angle, wherein waveform (A) (shown by a thin line) shows a time response of the actual steering angle θh to the target steering angle without compensation by the steering wheel damping section, the steering wheel vibration eliminating section or the like, waveform (B) (shown by a dotted line) shows a time response of the actual steering angle θh to the target steering angle with only the steering wheel vibration eliminating section, and waveform (C) (shown by a thick line) shows a time response of the actual steering angle θh to the target steering angle with both the steering wheel damping section and the steering wheel vibration eliminating section;

FIG. 30 is a block diagram showing a configuration example of a control system of an electric power steering apparatus in a fifth modified example of the third embodiment of the present invention;

FIG. 31 is a block diagram showing a configuration example of a steering angle control section in the fifth modified example of the third embodiment of the present invention;

FIG. 32 is a block diagram showing a configuration example of a control system of an electric power steering apparatus in a sixth modified example of the third embodiment of the present invention;

FIG. 33 is a block diagram showing a configuration example of a steering angle control section in the sixth modified example of the third embodiment of the present invention;

FIG. 34 is a block diagram showing a configuration example of a steering angle control section in a fourth embodiment of the present invention;

FIG. 35 is a diagram showing time responses of the target steering angle and the actual steering angle, wherein waveform (A) shows a time response of the target steering angle, waveform (B) shows a time response of the actual steering angle without a motor velocity command FF filter, and waveform (C) shows a time response of the actual steering angle with the motor velocity command FF filter;

FIG. 36 is a block diagram showing a configuration example of a steering angle control section in a seventh modified example of the fourth embodiment of the present invention; and

FIG. 37 is a block diagram showing a configuration example of a steering angle control section in an eighth modified example of the fourth embodiment of the present invention.

Mode for Carrying Out the Invention

The present invention is an electric power steering apparatus (EPS) that has an assist mode of controlling a motor which provides a steering system of a vehicle with an assist torque when a driver steers the steering system and an automatic steering mode of controlling the motor depending on a target steering angle given by the vehicle when the vehicle autonomously travels, and is the electric power steering apparatus that enables suppression of a high-frequency vibration and enhancement of followability of the motor angular velocity to the motor velocity command by using a velocity control section (performing, for example, PI-control, P-control, PID-control, or proportional preceding type PI control) and comprising a stabilization compensating section for adding a motor current compensation value to a motor current command value on the basis of a motor angular velocity, a torsion bar torque or a column angle, even when a gain of the velocity control section is made large. Further, the present invention enables suppression of a vibration originating in a response characteristic, and enables elimination of a vibration (a vibration originating in a spring inertia system) caused by springiness of a torsion bar and an inertia moment of a steering wheel in an automatic steering mode by using a rate limiter and a filter.

Hereinafter, an embodiment of the present invention will be described with reference to the accompanying drawings in detail.

First, an electric power steering apparatus of a first embodiment of the present invention uses two operation mode, that is, an assist mode and an automatic steering mode. They are the assist mode of controlling a motor which provides a steering system of a vehicle with an assist torque when a driver steers the steering system and the automatic steering mode of controlling the motor depending on a target steering angle given by the vehicle when the vehicle autonomously travels.

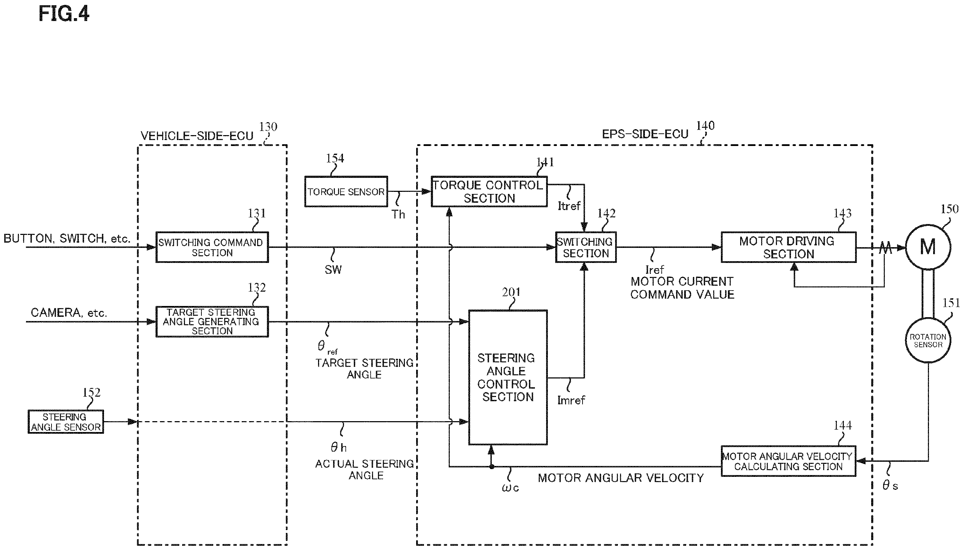

FIG. 4 shows a configuration example of the first embodiment of the present invention. A rotation sensor 151 such as a resolver for detecting a motor rotational angle θs is connected to a motor 150, and the motor 150 is driven and controlled through a vehicle-side-ECU 130 and an EPS-side-ECU 140.

The vehicle-side-ECU 130 comprises a switching command section 131 which outputs a switching command SW to switch to the automatic steering mode or the assist mode on the basis of a button, a switch or the like indicating an intention of a driver, and a target steering angle generating section 132 which generates a target steering angle θref on the basis of a signal from a camera (an image), a distance sensor or the like. An actual steering angle θh which is detected by a steering angle sensor 152 providing for a column shaft, is inputted into a steering angle control section 201 in the EPS-side-ECU 140 through the vehicle-side-ECU 130.

The switching command section 131 outputs the switching command SW on the basis of a signal for discerning that the automatic steering mode is entered, for example, a signal of a button or a switch which is provided for a dashboard or in the vicinity of a steering wheel and indicates the intention of the driver, or a signal of a vehicle state determined in accordance with such as a parking mode set in a shift, and the switching command SW is inputted into a switching section 142 in the EPS-side-ECU 140. The target steering angle generating section 132 generates the target steering angle θref on the basis of the signal from the camera (the image), the distance sensor or the like by a known method, and the generated target steering angle θref is inputted into the steering angle control section 201.

The EPS-side-ECU 140 comprises a torque control section 141 which outputs a motor current command value Itref calculated on the basis of a steering torque Th and a motor angular velocity $\omega c$, the steering angle control section 201 which calculates and outputs a motor current command value Imref for steering angle automatic control on the basis of the target steering angle $\theta$ref, the actual steering angle $\theta$h and the motor angular velocity $\omega c$, the switching section 142 which switches between the motor current command values Itref and Imref by the switching command SW, a motor driving section 143 which drives and controls the motor 150 on the basis of the motor current command value (Itref or Imref) outputted from the switching section 142, and a motor angular velocity calculating section 144 which calculates the motor angular velocity $\omega c$ on the basis of the motor rotational angle $\theta$s outputted from the rotation sensor 151. The switching section 142 switches between the assist mode by the torque control section 141 and the automatic steering mode by the steering angle control section 201 on the basis of the switching command SW outputted from the switching command section 131 in the vehicle-side-ECU 130. The switching section 142 outputs the motor current command value Itref in the assist mode, and outputs the motor current command value Imref in the automatic steering mode. The motor driving section 143 comprises a PI current control section, a PWM-control section, an inverter or the like (not shown).

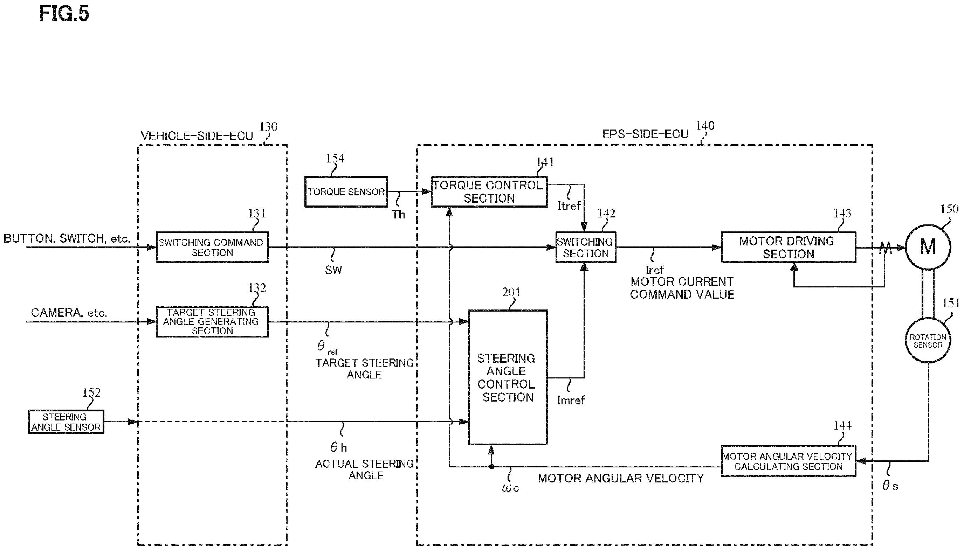

The steering angle control section 201 is configured as shown in FIG. 5, and is a position control system including a velocity control loop system as a minor loop. A rate limiter 211 for rate limit processing is provided to perform smoothing when the target steering angle $\theta$ref changes rapidly, that is, to smoothly change the target steering angle $\theta$ref within a predetermined time change rate. A target steering angle $\theta$ta which is obtained by the rate limit processing to the target steering angle $\theta$ref at the rate limiter 211, is addition-inputted into a subtracting section 213A.

The actual steering angle $\theta$h is subtraction-inputted into the subtracting section 213A. An angle deviation $\theta$b between the actual steering angle $\theta$h and the smoothed target steering angle $\theta$ta is multiplied by a gain Kpp at a position control section (Kpp) 214, and the multiplied result is addition-inputted into a subtracting section 213B as a motor velocity command value $\omega$ref. The motor angular velocity $\omega c$ outputted from the motor angular velocity calculating section 144 is subtraction-inputted into the subtracting section 213B. A velocity deviation Df calculated at the subtracting section 213B is addition-inputted into a subtracting section 213C through an integrating section (having a gain Kiv) 215a. The motor angular velocity $\omega c$ is multiplied by a gain Kpv at a proportional section 215b, and the multiplied result is subtraction-inputted into the subtracting section 213C.

An output of the subtracting section 213C is inputted into an adding section 213D, and an output obtained by filtering processing to the motor angular velocity $\omega c$ by a stabilization compensating section 220 is inputted into the adding section 213D.

A limiter 217 limits an input to a set upper limit value and a set lower limit value. The limiter 217 outputs a value obtained by limiting the added result of the adding section 213D to the switching section 142 as the motor current command value Imref. The position control section 214 and a velocity control section 215 constitutes a current command value calculating section.

The first embodiment of the present invention is characterized by providing the steering angle control section 201 in the EPS-side-ECU 140 with the rate limiter 211 for the target steering angle and the stabilization compensating section 220 that contributes to stabilization of the system and suppresses a high-frequency vibration when a gain of the velocity control section is made large. This enables enhancement of followability of the motor angular velocity $\omega c$ to the motor velocity command value. Providing the rate limiter 211 achieves an effect of relaxing response of the actual steering angle when the target steering angle changes rapidly, enables a vehicle to be accurately moved corresponding to the target steering angle $\theta$ref regardless of a vehicle speed, and enables improvement of safety to a driver.

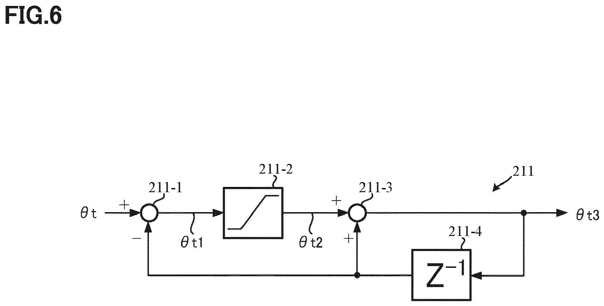

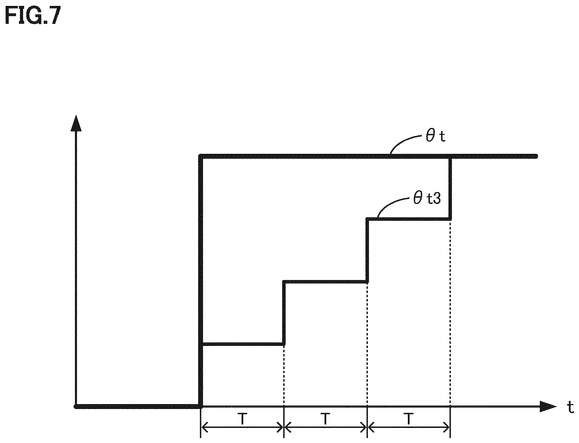

Here, the rate limiter 211 will be described. When the target steering angle $\theta$t (= $\theta$ref) changes rapidly, the rate limiter 211 smooths the target steering angle $\theta$t, and outputs the smoothed result. For example, the rate limiter 211 is configured as shown in FIG. 6. That is, the target steering angle $\theta$t is addition-inputted into a subtracting section 211-1, and a changed part $\theta$t2 is set at a changed part setting section 211-2 on the basis of a difference $\theta$t1 obtained by subtracting a past value of an output of the rate limiter 211 from the target steering angle $\theta$t. The changed part setting section 211-2 performs the setting on the basis of the difference $\theta$t1 between the past value from a retaining section ($Z^{-1}$) 211-4 and the target steering angle $\theta$t. A result of adding the changed part $\theta$t2 and the past value at an adding section 211-3, is outputted as a new target steering angle $\theta$t3 (= $\theta$ta). The changed part setting section 211-2 does not make the changed part $\theta$t2 exceed a set upper limit and a set lower limit. The difference $\theta$t1 between the target steering angle $\theta$t and the past value is calculated at every calculation period T, when the difference $\theta$t1 is out of range between the upper limit and the low limit, the output $\theta$t3 is changed stepwise or gradually as shown in FIG. 7 by repeatedly adding the upper limit or the lower limit to the past value, and finally the output $\theta$t3 is matched with the target steering angle $\theta$t. When the difference $\theta$t1 between the target steering angle $\theta$t and the past value is within the range between the upper limit and the low limit set at the changed part setting section 211-2, the changed part $\theta$t2 equal to the difference $\theta$t1 is outputted, is added to the past value, and as a result, the output $\theta$t3 coincides with the target steering angle $\theta$t. As these results, even when the target steering angle $\theta$t changes rapidly, the rate limiter 211 can smoothly change the rapidly changing target steering angle $\theta$t, prevents a rapid change of a current, and performs a function of reducing anxious feeling of a driver in automatic driving

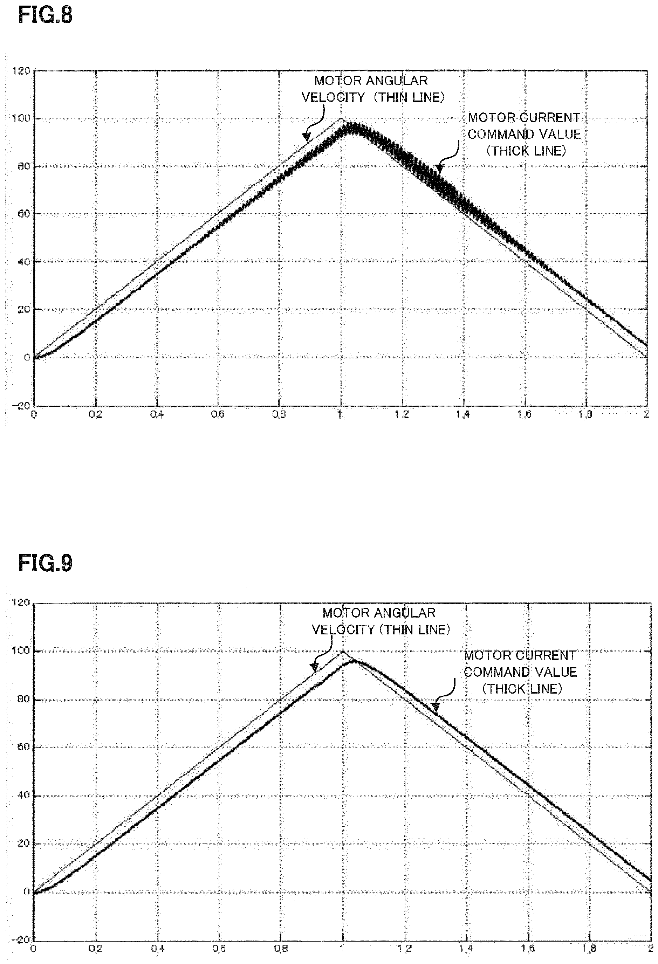

Next, with respect to the first embodiment of the present invention, an effect of the stabilization compensating section will be described by using time changes of the motor current command values in the case of providing the stabilization compensating section and in the case of not providing it. The time changes of the motor angular velocity and the motor current command value outputted from the steering angle control section in the case of not providing the stabilization compensating section are shown in FIG. 8. The time changes of the motor angular velocity and the motor current command value outputted from the steering angle control section in the case of providing the stabilization compensating section are shown in FIG. 9. A range of the horizontal axes of FIG. 8 and FIG. 9 is a time range from 0 to 2 seconds. The motor angular velocity [deg/s] and the motor current command value [deg/s] are converted into rotational angular velocities on a column shaft. A state where the motor angular velocity changes is represented by a thin line, and a state where the motor current command value changes is represented by a thick line. From FIG. 8 and FIG. 9, it is confirmed that providing the stabilization compensating section 220 contributes to stabilization of the system, and enables suppression of an oscillation and a vibration in a high frequency region. That is, it is shown that a gain of the velocity control section 215 can be enlarged in a state of suppressing the oscillation and the vibration in the high frequency region. The stabilization compensating section 220 performs the filtering processing to the motor angular velocity. For example, the stabilization compensating section 220 can set a primary filter having a cutoff frequency $f_{c1}$ as shown by the following expression 1.

$$[\text{Expression 1}]$$

$$G_{stable} = K_{sta} \frac{\dfrac{1}{2\pi f_{c1}} s}{\dfrac{1}{2\pi f_{c1}} s + 1}$$

($f_{c1}$ = 150 [Hz])

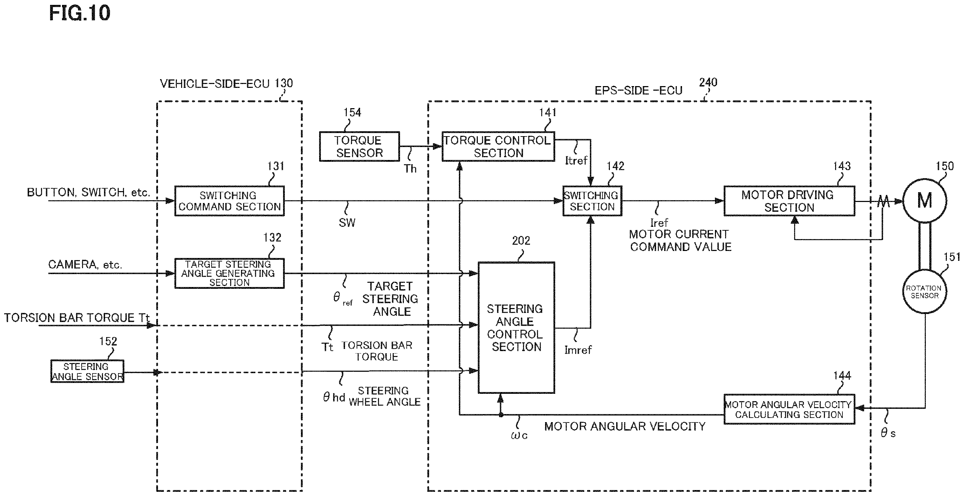

FIG. 10 shows a configuration example of a first modified example of the first embodiment of the present invention. The rotation sensor 151 such as a resolver for detecting the motor rotational angle θs is connected to the motor 150, and the motor 150 is driven and controlled through the vehicle-side-ECU 130 and the EPS-side-ECU 240.

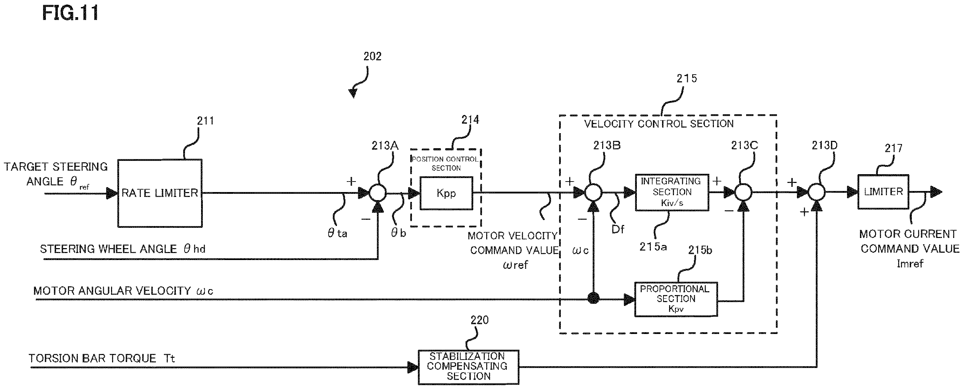

A steering angle control section 202 is configured as shown in FIG. 11, and is a position control system including a velocity control loop system as a minor loop.

The first modified example is different from the first embodiment in that a steering wheel angle θhd is subtraction-inputted into the subtracting section 213A, and the stabilization compensating section 220 inputs a torsion bar torque Tt.

Other configurations and effects are the same as those of those of the first embodiment.

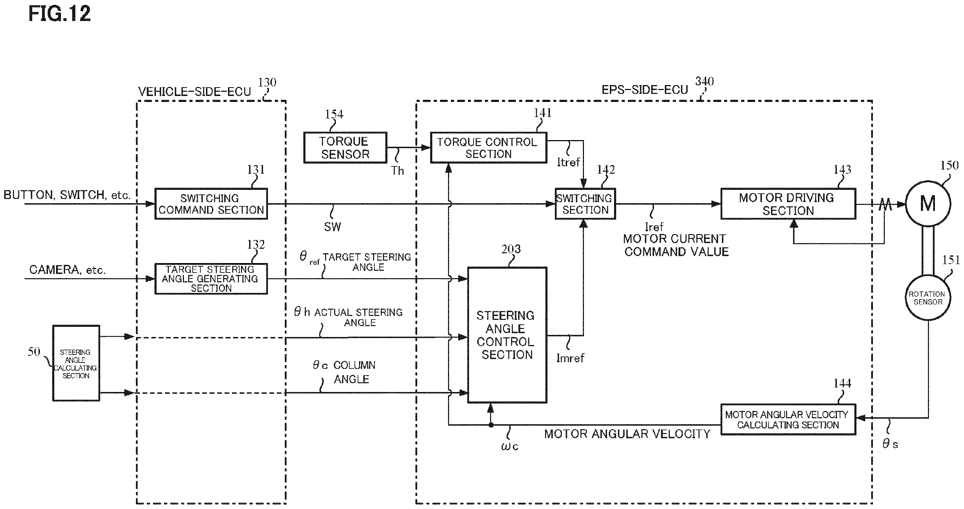

FIG. 12 shows a configuration example of a second modified example of the first embodiment of the present invention. The rotation sensor 151 such as a resolver for detecting the motor rotational angle θs is connected to the motor 150, and the motor 150 is driven and controlled through the vehicle-side-ECU 130 and the EPS-side-ECU 340.

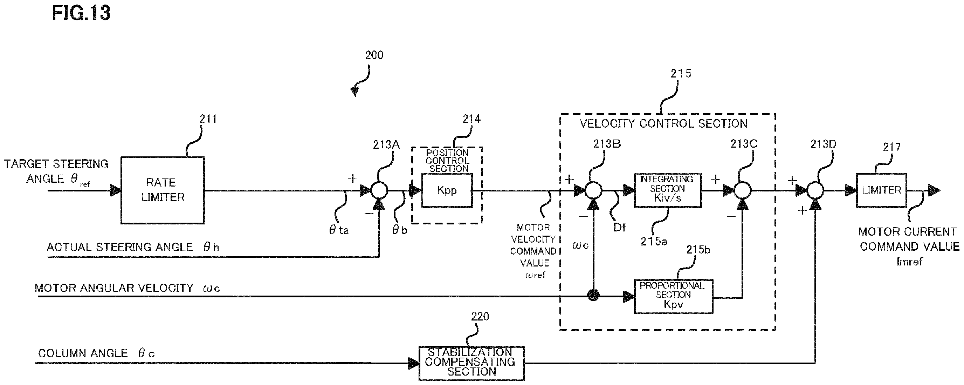

A steering angle control section 203 is configured as shown in FIG. 13, and is a position control system including a velocity control loop system as a minor loop.

The second modified example is different from the first embodiment in that the actual steering angle θh is subtraction-inputted into the subtracting section 213A, the velocity control section 215 inputs the actual steering angle θh, and the stabilization compensating section 220 inputs a column angle θc.

Other configurations and effects are the same as those of those of the first embodiment.

Next, a second embodiment will be described around difference from the first embodiment with reference to the accompanying drawings. For convenience of explanation, the same configurations as those of the first embodiment are designated with the same numerals or with numerals adding "X" at the end, and the explanation is omitted.

The difference between the first embodiment and the second embodiment is that a steering wheel vibration eliminating section 212 is provided for a steering angle control section 201X.

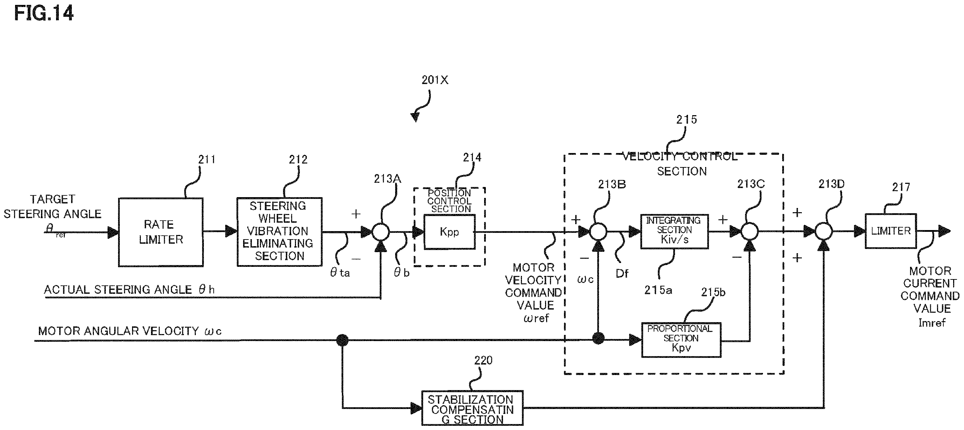

FIG. 14 is a block diagram showing a configuration example of the steering angle control section according to the second embodiment of the present invention. The steering wheel vibration eliminating section 212 eliminates a vibration (a vibration originating in a spring inertia system) caused by the springiness of the torsion bar and the inertia moment of the steering wheel in the automatic steering mode.

The steering wheel vibration eliminating section 212 cuts off a component in a predetermined frequency or less of the vibration caused by the springiness of the torsion bar and the inertia moment of the steering wheel in the automatic steering mode, and a signal obtained by the cutoff is addition-inputted into the subtracting section 213A. Since the actual steering angle θh is subtraction-inputted into the subtracting section 213A, the steering angle control section 201X includes a configuration where a difference between the output of the steering wheel vibration eliminating section 212 and the actual steering angle θh is inputted into the position control section 214. This enables enhancement of the followability of the motor angular velocity to the motor velocity command. Further, since the spring inertia system of the steering wheel is considered, the vibration component originating in the spring inertia system is eliminated, the vibration of the steering wheel is suppressed, and it is possible to suppress the steering wheel vibration during operation.

Here, a frequency characteristic of the steering wheel vibration eliminating section 212 will be described. It is known that a steering wheel vibration frequency of the vibration caused by the springiness of the torsion bar and the inertia moment of the steering wheel is about 12.5 [Hz]. Since the steering wheel vibration eliminating section 212 decreases a gain in the vicinity of the steering wheel vibration frequency, that is, in 12.5 ± 5.0 [Hz], a quadratic filter is suitable for the purpose. A quadratic filter used in the second embodiment can be expressed, for example, by the following expression 2 being an expression of a transfer function of a notch filter.

[Expression 2]

$$G_{notch} = \frac{\omega_d^{\,2}}{\omega_n^{\,2}} \frac{s^2 + 2\zeta_n \omega_n s + \omega_n^{\,2}}{s^2 + 2\zeta_d \omega_d s + \omega_d^{\,2}}$$

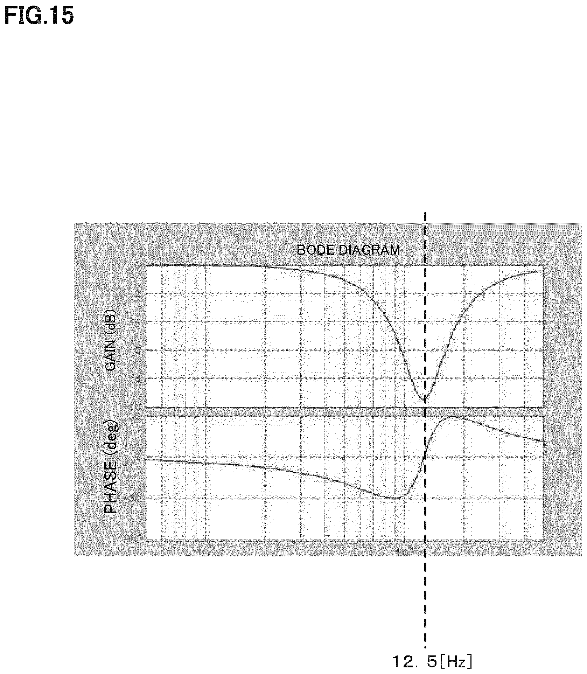

In the case that respective parameters of the expression 2 are set as center frequencies ωn = ωd. = 2π × 12.5 [rad/s], a damping constant ζn = 0.2, and a damping constant ζd = 0.6, a Bode diagram is shown in FIG. 15. It is found out that a gain in a range where the center frequency is about 12.5 [Hz] is decreased in the frequency characteristic of the steering wheel vibration eliminating section 212. The center frequency is set on the basis of the steering wheel vibration frequency of the vibration caused by the springiness of the torsion bar and the inertia moment of the steering wheel, and, for example, may be set within 12.5 ± 5.0 [Hz]. Further, ωn and ωd may not be coincide, and may be set from 2π × 7.5 to 2π × 17.5 [rad/s].

Next, a model which is generated by unifying a system from a column to a tire as an integrated inertia (column inertia) system by using a transfer function, will be shown. In order to model the column inertia system, the following physical quantities are used.

Jc: column inertia [kg·m²]

Dc: column damping coefficient [N·m/(rad/s)]

Jh: steering wheel inertia [kg·m²]

Dh: steering wheel damping coefficient [N·m/(rad/s)]

Ks: torsion bar spring constant [N·m/rad]

Ds: torsion bar damping coefficient [N·m/(rad/s)]

Kt: motor torque constant [N·m/A]

A motor torque is converted into a torque on a column shaft (considering an amount by reduction gears). Since it is assumed that an actual motor current is equal to a motor current command value Iref, current control is omitted. Further, since the stabilization compensating section influences a high frequency region, it is omitted.

θref: target steering angle [rad]

θh: actual steering angle [rad]

θc: column angle [rad]

ωc: column angular velocity [rad/s]

The column angular velocity ωc is obtained by converting a motor rotational velocity obtained by difference calculation of a motor rotational angle into a value on the column shaft in an ECU. Practically, filtering processing to the column angular velocity ωc by a low-pass filer (LPF) is performed in order to eliminate a noise in a high frequency region (not shown).

Tt: torsion bar torque [N·m]

Iref: motor current command value [A]

ωref: motor velocity command value [rad/s]

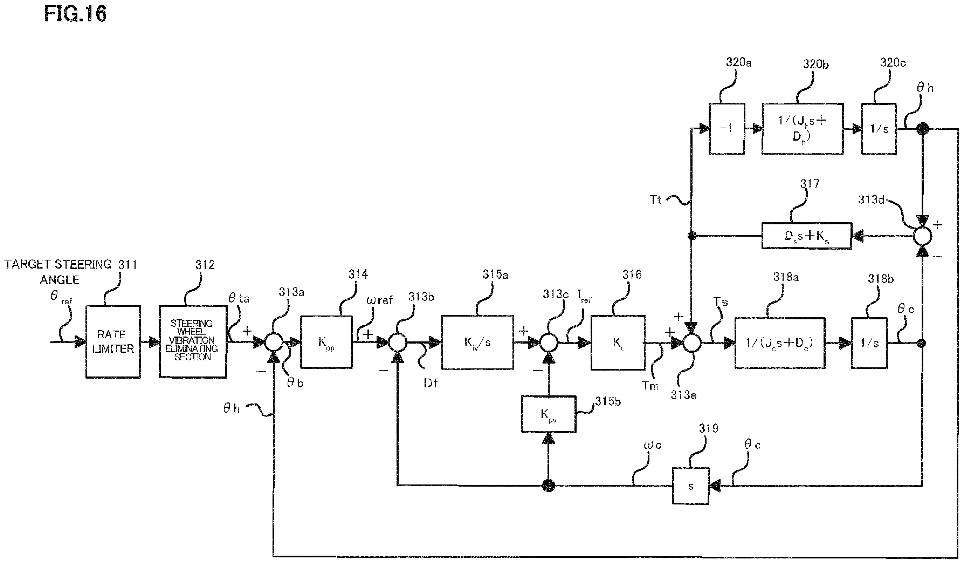

By using the above physical quantities, a whole block diagram from the target steering angle θref to the actual steering angle θh can be shown as a configuration in FIG. 16. The model will be described on the basis of this configuration.

The model is a position control system including a velocity control loop system as a minor loop. The target steering angle θref is inputted into a rate limiter 311 that performs smoothing when the target steering angle θref changes rapidly, that is, makes the target steering angle θref changed smoothly within a predetermined time change rate. The target steering angle θta going through a steering wheel vibration eliminating section 312 that eliminates a vibration (a vibration originating in a spring inertia system) caused by the springiness of the torsion bar and the inertia moment of the steering wheel in the automatic steering mode, is addition-inputted into a subtracting section 313a.

The actual steering angle θh is subtraction-inputted into the subtracting section 313a. The angle deviation θb between the smoothed target steering angle θta and the actual steering angle θh is multiplied by a gain Kpp at a position control section (Kpp) 314, and the multiplied result is addition-inputted into a subtracting section 313b as the motor velocity command value ωref. The velocity deviation Df that is calculated at the subtracting section 313b by subtraction-inputting the motor angular velocity ωc outputted from a differentiating section 319, is addition-inputted into a subtracting section 313c through an integrating section (having the gain Kiv) 315a. At the same time, the motor angular velocity ωc is multiplied by a gain Kpv at a proportional section 315b, and the multiplied result is subtraction-inputted into the subtracting section 313c. In the whole block diagram, the subtracted result of the subtracting section 313c is outputted to a motor torque converting section 316 as the motor current command value Iref, the motor torque converting section 316 converts the motor current command value Iref into a motor torque Tm, and outputs the motor torque Tm to an adding section 313e. An addition torque Ts that is generated by inputting the torsion bar torque Tt generated by a torsion bar section 317 and the motor torque Tm into the adding section 313e, is inputted into a column inertia section 318a, and an output from the column inertia section 318a is inputted into an integrating section 318b. An output of the integrating section 318b is inputted into the differentiating section 319 and a subtracting section 313d as the column angle θc. The differentiating section 319 converts the inputted column angle θc into the motor angular velocity ωc, and outputs the motor angular velocity ωc to the proportional section (Kpv) 315b and the subtracting section 313b. The motor current command value Iref and the motor torque Tm are generated on the basis of the motor angular velocity ωc. The torsion bar torque Tt generated by the torsion bar section 317 is outputted to a delay section 320a, an output of the delay section 320a is inputted into a steering wheel inertia section 320b, an output of steering wheel inertia section 320b is inputted into an integrating section 320c, and the actual steering angle θh is generated as the result calculated at the integrating section 320c. The actual steering angle θh generated by the integrating section 320c is subtraction-inputted into the subtracting section 313a, and is used to generate the motor velocity command value ωref. The column angle θc outputted from the integrating section 318b is subtraction-inputted into the subtracting section 313d, and the actual steering angle θh is addition-inputted into the subtracting section 313d. Thus, at the torsion bar section 317 in the whole block diagram, the torsion bar torque Tt is generated on the basis of a difference between the column angle θc and the actual steering angle θh.

Therefore, a transfer function $G_{\theta t}$ from the target steering angle θta to the torsion bar torque Tt in the whole block diagram as shown in FIG. 16, becomes the following. In the case that the target steering angle is θta [rad] and the torsion bar torque is Tt [N·m], the transfer function $G_{\theta t}$ is expressed as the expression 3.

[Expression 3]

$$G_{\theta t} = \frac{T_t}{\theta_{ta}} = G_{\theta i} G_{it}$$

$G_{\theta i}$ and $G_{it}$ in the expression 3 are expressed as the expression 4 and the expression 5 respectively.

[Expression 4]

$$G_{\theta i} = \frac{I_{ref}}{\theta_{ta}} = \frac{K_{pp} G_{\omega i}}{K_{pp} G_{\omega i} G_{ih} + 1}$$

[Expression 5]

$$G_{it} = \frac{T_t}{I_{ref}} = G_{ic} G_{ct}$$

$G_{\omega i}$ and $G_{ih}$ in the expression 4 are expressed as the expression 6 and the expression 7 respectively.

[Expression 6]

$$G_{\omega i} = \frac{I_{ref}}{\omega_{ref}} = \frac{\dfrac{K_{iv}}{s}}{\left(K_{pv}s + K_{iv}\right)G_{ic} + 1}$$

[Expression 7]

$$G_{ih} = -\frac{G_{it}}{J_h s^2 + D_h s}$$

$G_{ic}$ in the expression 5 is expressed as the expression 8.

[Expression 8]

$$G_{ic} = \frac{\theta_c}{I_{ref}} = \frac{K_t}{J_c s^2 + D_c s - G_{ct}}$$

$G_{ct}$ in the expression 5 and the expression 8 is expressed as the expression 9.

[Expression 9]

$$G_{ct} = \frac{T_t}{\theta_c} = \frac{(D_s s + K_s)(J_h s^2 + D_h s)}{J_h s^2 + (D_h + D_s)s + K_s}$$

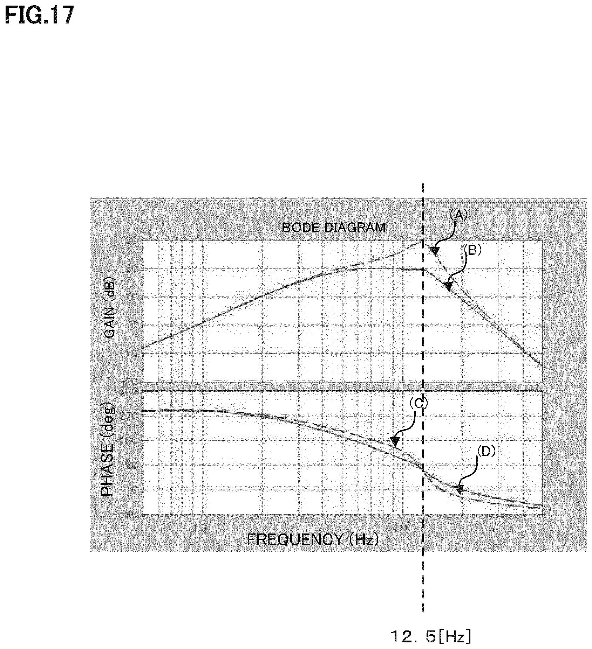

Here, on the basis of the above description and the model configured as the block diagram shown in FIG. 16, frequency characteristics of a transfer function from the target steering angle to the torsion bar torque in the case of providing the steering angle control section 201X with the steering wheel vibration eliminating section 212 and in the case of not providing, are simulated. The result of the comparison is shown in FIG. 17.

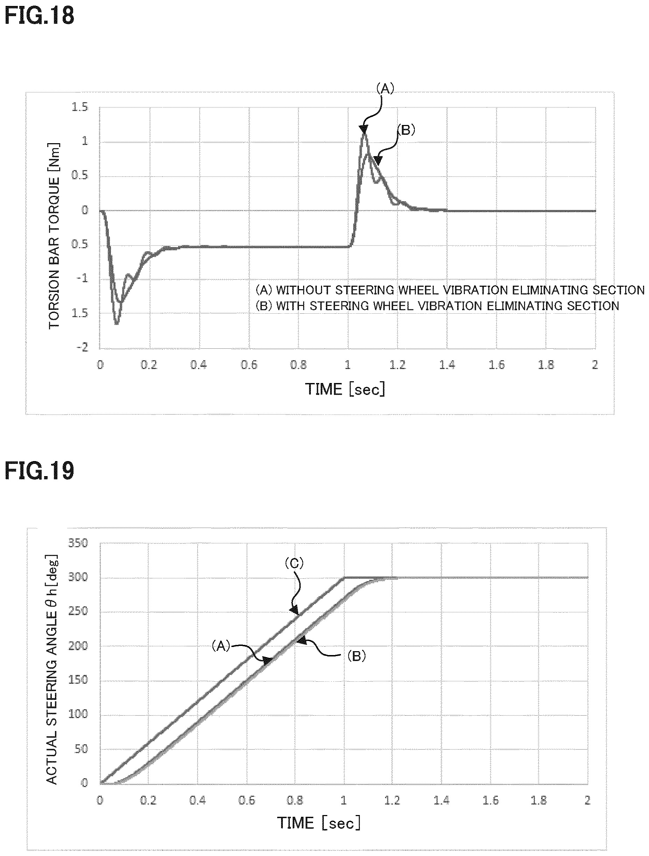

In FIG. 17, a frequency characteristic of a gain in the case of not providing the steering angle control section 201X with the steering wheel vibration eliminating section 212 is shown by the dotted line (A), a frequency characteristic of a phase in that case is shown by the dotted line (C), a frequency characteristic of a gain in the case of providing the steering angle control section 201X with the steering wheel vibration eliminating section 212 is shown by the solid line (B), and a frequency characteristic of a phase in that case is shown by the solid line (D). Comparing these, in the case of providing the steering angle control section 201X with the steering wheel vibration eliminating section 212, the gain is decreased around about 12.5 [Hz]. That is, it is found out that the steering wheel vibration caused by the springiness of the torsion bar and the inertia moment of the steering wheel is eliminated. Further, the torsion bar torque in the case of a response of the steering angle in FIG. 19 as described below, is shown in FIG. 18. Astringency of the vibration is improved.

In order to describe an effect of the present invention, time responses of the torsion bar torque with the steering wheel vibration eliminating section 212 and without it are shown in FIG. 18. As shown in FIG. 18, it is found out that the time response with the steering wheel vibration eliminating section 212 has a peak but the vibration is more suppressed.

Time responses of the actual steering angle θh in the case of inputting the target steering angle θref to the steering angle control section 201X, are shown in FIG. 19. Waveform (A) shows a time response of the actual steering angle following the target steering angle without the steering wheel vibration eliminating section. Waveform (B) shows a time response of the actual steering angle following the target steering angle with the steering wheel vibration eliminating section. The leftmost graph in FIG. 19, that is, waveform (C) shows a time response of the target steering angle. (A) and (B) in FIG. 18 and (A) and (B) in FIG. 19 are time sequence data in the same simulation result.

The time response of the actual steering angle θh following the target steering angle with the steering wheel vibration eliminating section 212 and the time response of the actual steering angle θh following the target steering angle without the steering wheel vibration eliminating section 212 are almost the same, almost overlap each other, and this shows that the steering wheel vibration eliminating section 212 does not influence the time response of the actual steering angle θh.

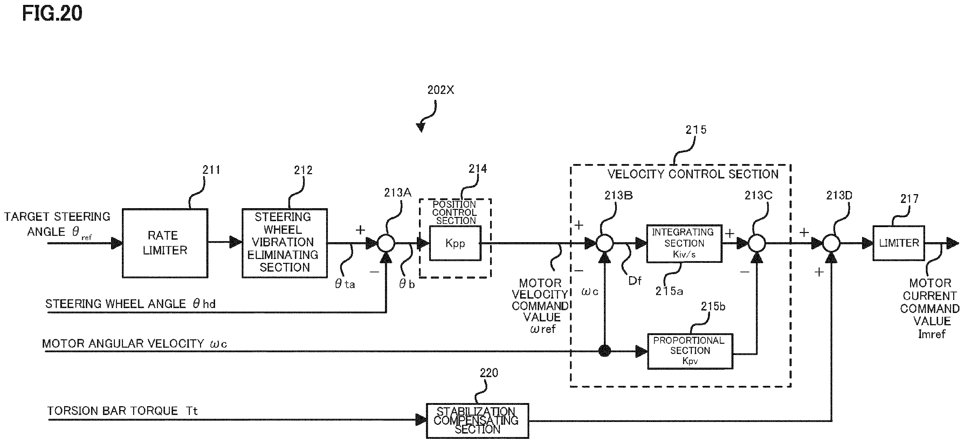

FIG. 20 is a block diagram showing a configuration example of a steering angle control section 202X in a third modified example of the second embodiment of the present invention. The steering wheel vibration eliminating section 212 eliminates the vibration (the vibration originating in the spring inertia system) caused by the springiness of the torsion bar and the inertia moment of the steering wheel in the automatic steering mode.

The third modified example is different from the second embodiment in that the steering wheel angle θhd is subtraction-inputted into the subtracting section 213A, and the stabilization compensating section 220 inputs the torsion bar torque Tt.

Other configurations and effects are the same as those of the second embodiment.

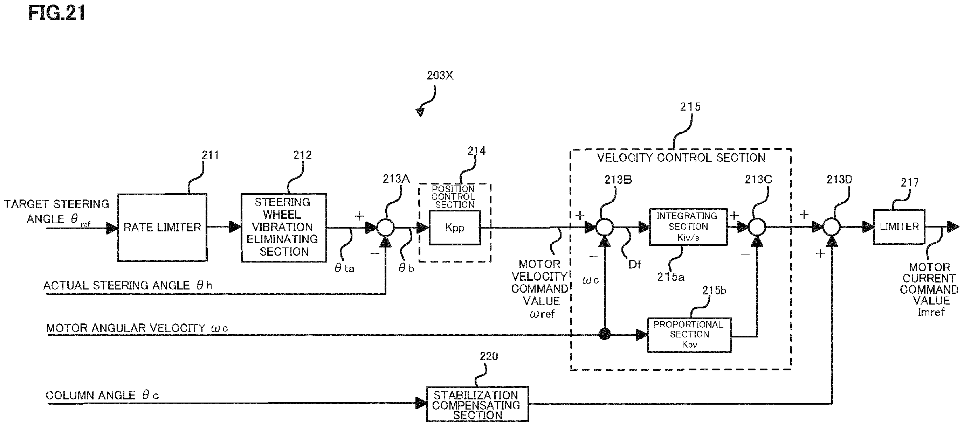

FIG. 21 is a block diagram showing a configuration example of a steering angle control section 203X in a fourth modified example of the second embodiment of the present invention. The steering wheel vibration eliminating section 212 eliminates the vibration (the vibration originating in the spring inertia system) caused by the springiness of the torsion bar and the inertia moment of the steering wheel in the automatic steering mode.

The fourth modified example is different from the second embodiment in that the actual steering angle θh is subtraction-inputted into the subtracting section 213A, the velocity control section 215 inputs the motor angular velocity ωc, and the stabilization compensating section 220 inputs the column angle θc.

Other configurations and effects are the same as those of the second embodiment.

Next, a third embodiment will be described around difference from the second embodiment with reference to the accompanying drawings. For convenience of explanation, the same configurations as those of the first embodiment and the second embodiment are designated with the same numerals or with numerals adding "Y" at the end, and the explanation is omitted.

The difference between the second embodiment and the third embodiment is that a steering wheel damping section 216 is provided for a steering angle control section 201Y. The steering wheel damping section 216 enables more suppression of the steering wheel vibration.

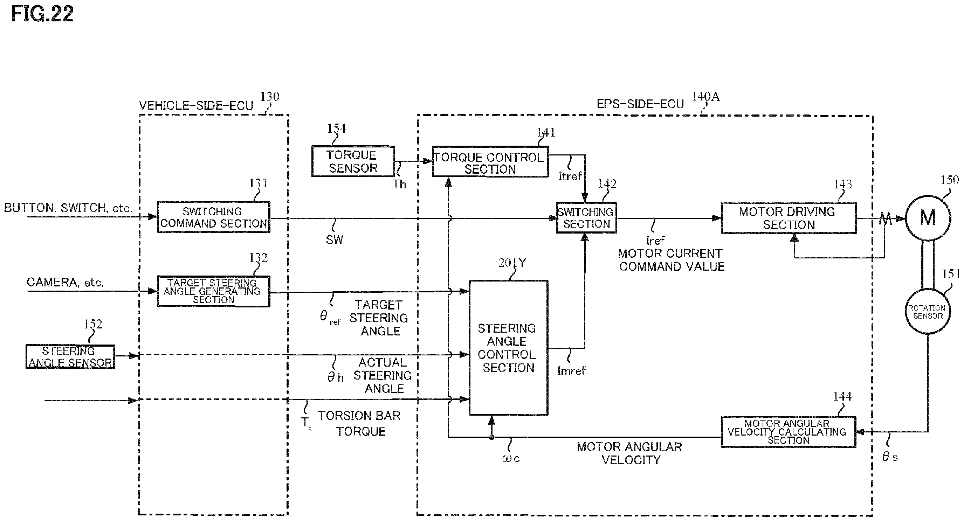

FIG. 22 is a block diagram showing a configuration example of a control system of an electric power steering apparatus according to the third embodiment of the present invention. FIG. 22 will be described by focusing on difference from the second embodiment. An EPS-side-ECU 140A comprises the torque control section 141 which outputs the motor current command value Itref calculated on the basis of the steering torque Th and the motor angular velocity ωc, and the steering angle control section 201Y which calculates and outputs the motor current command value Imref for the steering angle automatic control on the basis of the target steering angle θref, the actual steering angle θh, the motor angular velocity ωc, and moreover the torsion bar torque Tt. That is, the EPS-side-ECU 140A is configured to add a configuration that the torsion bar torque Tt is inputted into the steering angle control section 201Y to the configuration shown in the above-mentioned FIG. 4. Moreover, a signal of the torsion bar torque Tt is also called a twist torque signal.

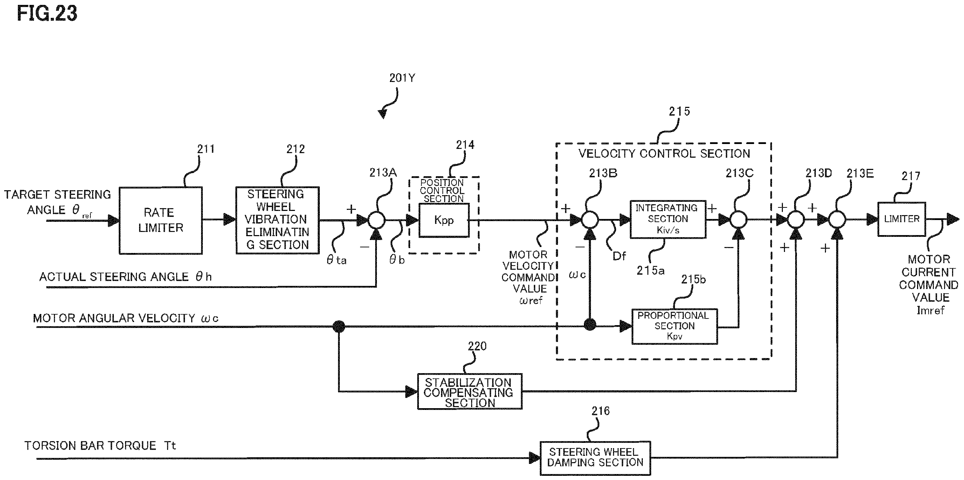

FIG. 23 is a block diagram showing a configuration example of the steering angle control section 201Y in the third embodiment of the present invention. The steering wheel damping section 216 is provided for the steering angle control section 201Y to suppress the steering wheel vibration during operation. In the steering angle control section 201Y, the output from the subtracting section 213C is inputted into the adding section 213D, and the output obtained by the filtering processing to the motor angular velocity ωc by the stabilization compensating section 220 is inputted into the adding section 213D. An output of the adding section 213D is inputted into an adding section 213E. The steering wheel damping section 216 performs signal processing to cut off a predetermined frequency or less of the torsion bar torque Tt. An output of the steering wheel damping section 216 is inputted into the adding section 213E. The steering angle control section 201Y is configured so that an output from the adding section 213E is inputted into the limiter 217 at the final stage. That is, the steering angle control section 201Y is configured to add a configuration of adding a signal outputted from the adding section 213D and the output of the steering wheel damping section 216 at the adding section 213E, and outputting the added result to the limiter 217, to the configuration shown in FIG. 14. This enables the cutoff of the predetermined frequency or less of the torsion bar torque Tt and the suppression of the steering wheel vibration during operation.

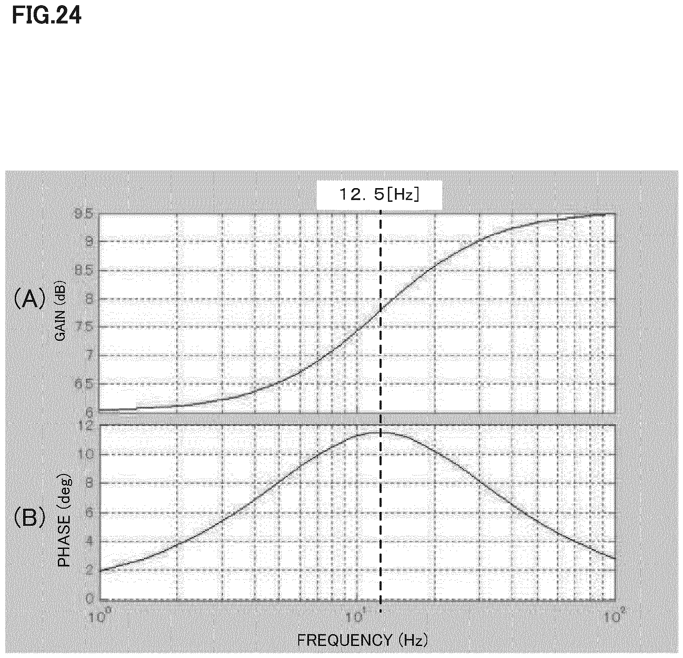

With respect to a frequency characteristic of the steering wheel damping section, FIG. 24A is a characteristic diagram showing a frequency characteristic of a gain, and FIG. 24B is a characteristic diagram showing a frequency characteristic of a phase. As shown in the characteristic diagrams of FIGs. 24A and 24B, the steering wheel damping section 216 is a phase advance filter, whose cutoff frequency is 12.5 [Hz], attenuates components of its frequency or less, and performs phase advance (primary) compensation. A cutoff frequency of the phase advance filter is set on the basis of the steering wheel vibration frequency of the vibration caused by the springiness of the torsion bar and the inertia moment of the steering wheel, and may be set, for example, within 12.5 ± 5.0 [Hz]. Not only the phase advance filter but a filter that can reduce a resonance gain characteristic in the vicinity of 12.5 [Hz], may be used.

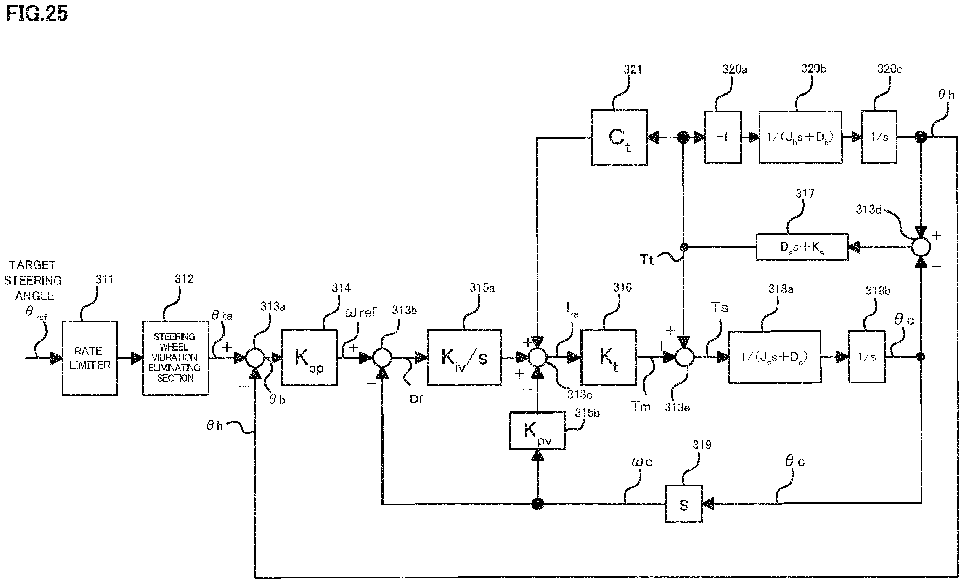

Also in the third embodiment, as with the second embodiment, a whole block diagram from the target steering angle θref to the actual steering angle θh can be shown as a configuration in FIG. 25. The model will be described on the basis of this configuration .

FIG. 25 will be described by focusing on difference from the second embodiment. In this case, the model comprises a proportional section 321 where the torsion bar torque Tt is multiplied by a gain Ct, and the multiplied result is addition-inputted into the subtracting section 313c, in addition to the above configuration (shown in FIG. 16).

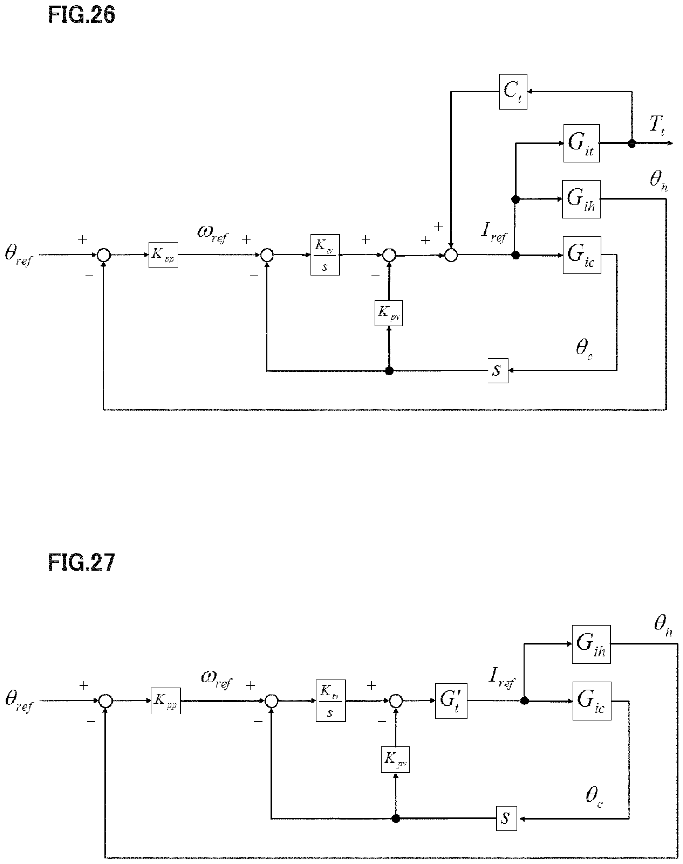

By an equivalent transformation of the whole block diagram from the target steering angle θref to the actual steering angle θh as shown in FIG. 25, a block diagram as shown in FIG. 26 is obtained. By a further equivalent transformation, a block diagram as shown in FIG. 27 is obtained. Here, the rate limiter, the limiter and the steering wheel vibration eliminating section are omitted.

In the case that the target steering angle is θta [rad] and the torsion bar torque is Tt [N·m], as with the above first embodiment, the transfer function $G_{\theta t}$ from the target steering angle θta to the torsion bar torque Tt in the whole block diagram as shown in FIG. 27 is expressed as the expression 3, and $G_{ei}$ and $G_{it}$ in the expression 3 are expressed as the expression 4 and the expression 5 respectively.

In the third embodiment, $G_{ih}$ and $G_{\omega i}$ in the expression 4 are expressed as the expression 10 and the expression 11 respectively.

[Expression 10]

$$G_{ih} = -\frac{G_{it}}{J_h s^2 + D_h s}$$

[Expression 11]

$$G_{\omega i} = \frac{I_{ref}}{\omega_{ref}} = \frac{\dfrac{K_{iv}}{s} G_t{}'}{(K_{pv}s + K_{iv})G_t{}'G_{ic} + 1}$$

$G_t{}'$ in the expression 11 is expressed as the expression 12.

[Expression 12]

$$G_t{}' = \frac{1}{1 - C_t G_{it}}$$

$G_{ct}$ and $G_{ic}$ in the expression 5 are expressed as the expression 13 and the expression 14 respectively.

[Expression 13]

$$G_{ct} = \frac{T_t}{\theta_c} = -\frac{(D_s s + K_s)(J_h s^2 + D_h s)}{J_h s^2 + (D_h + D_s)s + K_s}$$

[Expression 14]

$$G_{ic} = \frac{\theta_c}{I_{ref}} = \frac{K_t}{J_c s^2 + D_c s - G_{ct}}$$

Here, an effect of the third embodiment of the present invention will be described by using FIG. 28. Waveform (A) in FIG. 28 shows a time response of the target steering angle. Waveform (B) shows a time response of the actual steering angle θh to the target steering angle with only the steering wheel vibration eliminating section. Waveform (C) shows a time response of the actual steering angle θh to the target steering angle with both the steering wheel damping section and the steering wheel vibration eliminating section. A simulation result of a time response of the torsion bar torque is shown in FIG. 29. According to the simulation result shown in FIG. 29, the steering angle control section using the steering wheel damping section and the steering wheel vibration eliminating section has an effect of suppressing the steering wheel vibration during operation. Further, the astringency of the vibration is improved.

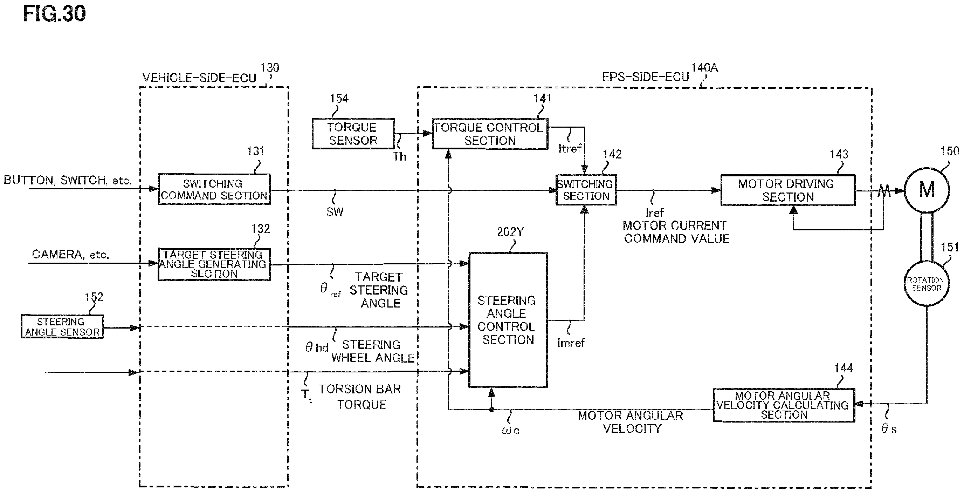

FIG. 30 is a block diagram showing a configuration example of a control system of an electric power steering apparatus according to a fifth modified example of the third embodiment of the present invention.

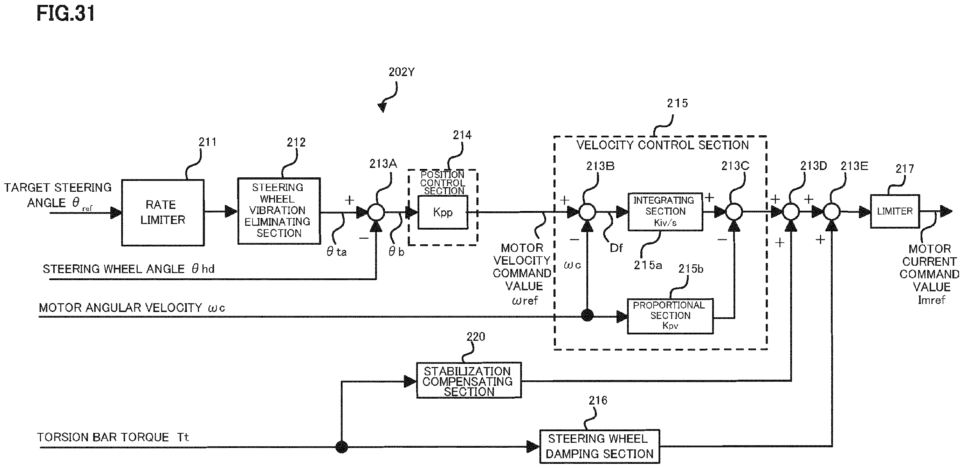

FIG. 31 is a block diagram showing a configuration example of a steering angle control section 202Y in the fifth modified example of the third embodiment of the present invention.

The fifth modified example is different from the third embodiment in that the steering wheel angle θhd is subtraction-inputted into the subtracting section 213A, and the stabilization compensating section 220 inputs the torsion bar torque Tt.

Other configurations and effects are the same as those of the third embodiment.

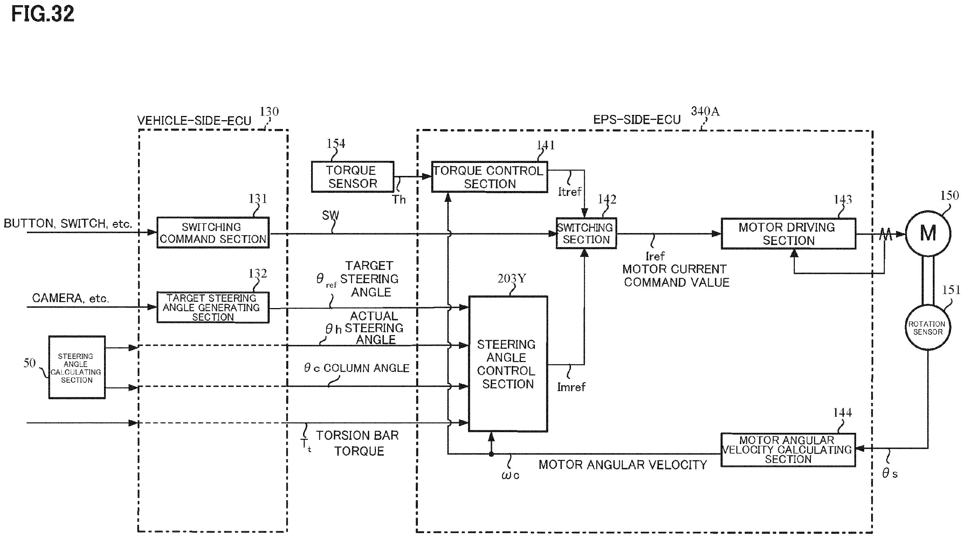

FIG. 32 is a block diagram showing a configuration example of a control system of an electric power steering apparatus according to a sixth modified example of the third embodiment of the present invention.

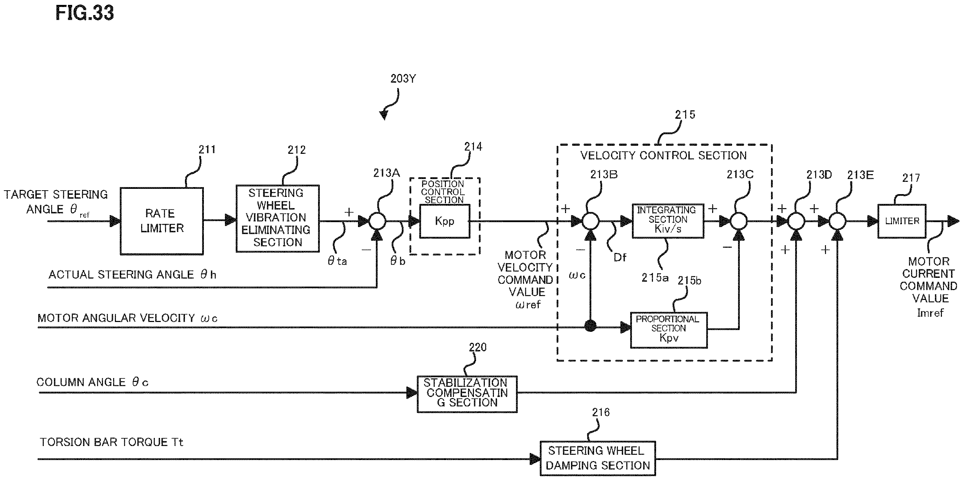

FIG. 33 is a block diagram showing a configuration example of a steering angle control section 203Y in the sixth modified example of the third embodiment of the present invention.

The sixth modified example is different from the third embodiment in that the actual steering angle θh is subtraction-inputted into the subtracting section 213A, and the stabilization compensating section 220 inputs the column angle θc.

Other configurations and effects are the same as those of the third embodiment.

Next, a fourth embodiment will be described around difference from the third embodiment with reference to the accompanying drawings.

The difference between the third embodiment and the fourth embodiment is that a motor velocity command FF filter 218 is provided for a steering angle control section 201Z. For convenience of explanation, the same configurations as those of the first embodiment to the third embodiment are designated with the same numerals or with numerals adding "Z" at the end, and the explanation is omitted.

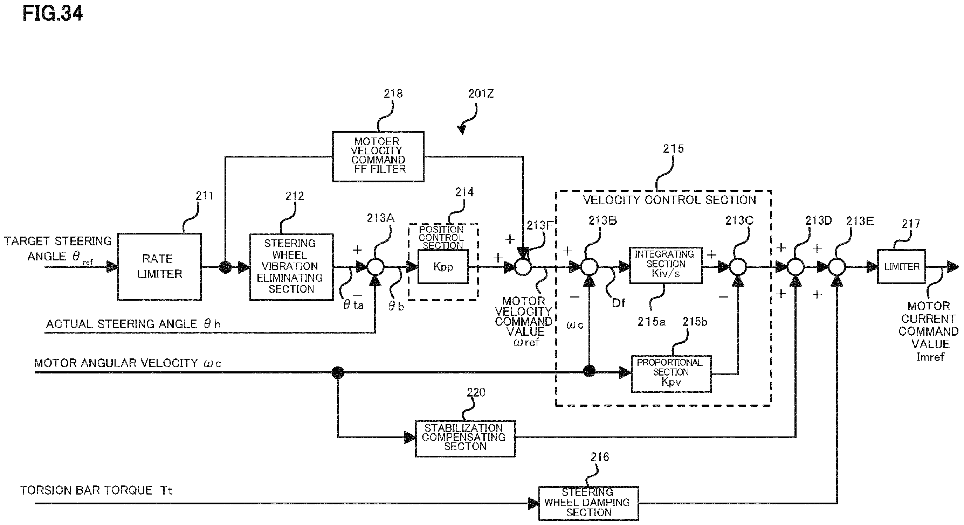

FIG. 34 is a block diagram showing a configuration example of the steering angle control section 201Z in the fourth embodiment of the present invention.

FIG. 34 will be described by focusing on difference from the third embodiment . In the steering angle control section 201Z, the output of the rate limiter 211 is inputted into the motor velocity command FF filter 218. The steering angle control section 201Z is configured so that the motor velocity command FF filter 218 performs feedforward (FF) processing to the output of the rate limiter 211 and the result is inputted into an adding section 213F as a feedforward motor angular velocity command value. The motor velocity command FF filter 218 is provided in order to improve responsiveness of steering angle control by extending a control band of the actual steering angle corresponding to the target steering angle to a high-frequency side.

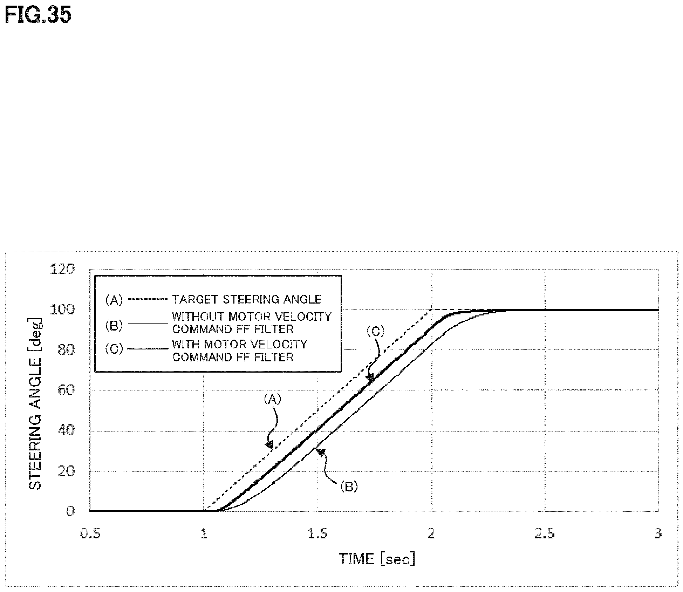

In the case of providing the steering angle control section 201Z with the motor velocity command FF filter 218, a result of a simulation is shown in FIG. 35. In FIG. 35, waveform (A) shows a time response of the target steering angle, waveform (B) shows a time response of the actual steering angle without the motor velocity command FF filter, and waveform (C) shows a time response of the actual steering angle with the motor velocity command FF filter. As shown in FIG. 35, it is found out that followability of the steering angle control with the motor velocity command FF filter is more improved than that without it. The motor velocity command FF filter enables the extension of the control band of the actual steering angle corresponding to the target steering angle after the rate limit processing to a high-frequency side. Further, followability of the actual steering angle to the target steering angle is enhanced, responsiveness of vehicle motion control is also improved, so that the motor velocity command FF filter is effective in a rapid lane change.

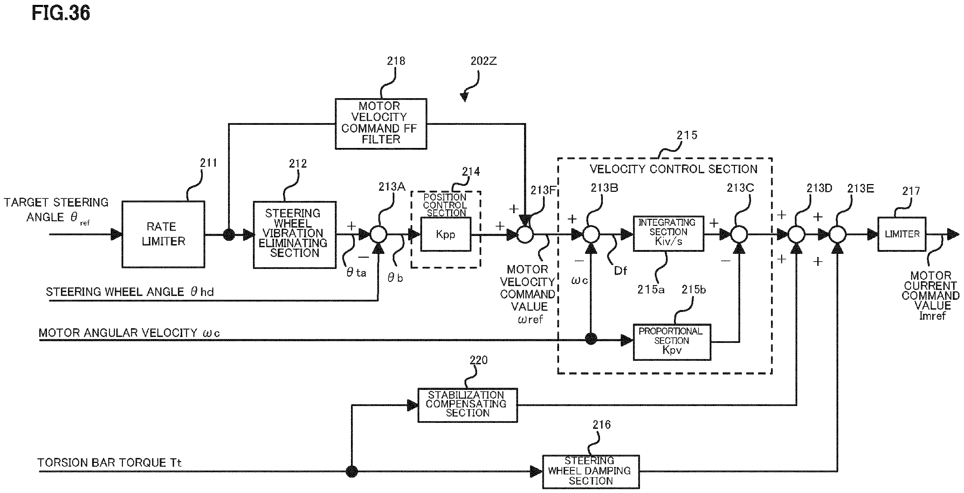

FIG. 36 is a block diagram showing a configuration example of a steering angle control section 202Z in a seventh modified example of the fourth embodiment of the present invention.

The seventh modified example is different from the fourth embodiment in that the steering wheel angle θhd is subtraction-inputted into the subtracting section 213A, and the stabilization compensating section 220 inputs the torsion bar torque Tt.

Other configurations and effects are the same as those of the fourth embodiment.

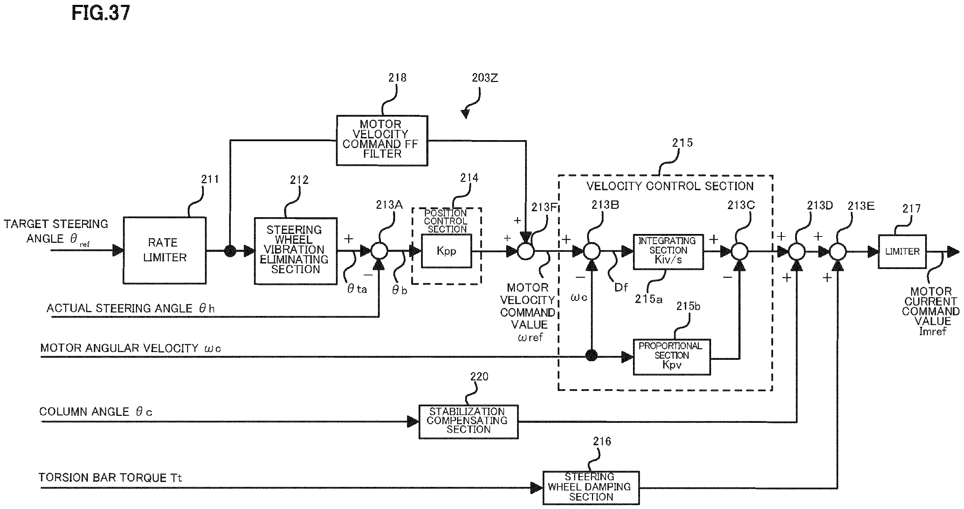

FIG. 37 is a block diagram showing a configuration example of a steering angle control section 203Z in an eighth modified example of the fourth embodiment of the present invention.

The eighth modified example is different from the fourth embodiment in that the actual steering angle θh is subtraction-inputted into the subtracting section 213A, and the stabilization compensating section 220 inputs the column angle θc.

Other configurations and effects are the same as those of the fourth embodiment.

All of the above embodiments of the present invention are only what shows an example of incorporating the present invention (for example, sensor information such as the target steering angle, the actual steering angle, the torsion bar torque, the motor angular velocity or the like, control quantity, etc.) in the case of implementing the present invention, and technical scope of the present invention should not be interpreted attributively by these . That is, the present invention can be implemented in various forms without departing from its technical idea or its main feature. Further, functions performed by the above embodiments may be fittingly implemented by combining them as much as possible. Various stages are included in the above embodiment, and various inventions can be extracted by fittingly combining disclosedplural elements. Therefore, if several elements are deleted from all elements shown in the embodiment but the effect can be obtained, the configuration where these elements are deleted can be extracted as an invention. For example, the configuration where the rate limiter, the limiter or the like is deleted can be extracted as an invention. Moreover, all of the graphs and so on shown in the embodiments of the present invention show a result of a numerical analysis by a simulation.

In each embodiment of the present invention, the actual steering angle, the motor angular velocity and the torsion bar torque (the twist torque) are collectively referred to as a steering state signal. All of them are signals or data relating to an operation of a steering wheel or a state of a motor in an electric power steering apparatus.

Explanation of Reference Numerals

| | |
|---|---|
| 2 | column shaft (steering wheel shaft) |
| 2A | input shaft |
| 2B | output shaft |
| 20 | motor |
| 23 | torsion bar |
| 100 | control unit |
| 130 | vehicle-side-ECU |
| 131 | switching command section |
| 132 | target steering angle generating section |
| 140, 140A | EPS-side-ECU |
| 240, 240A | EPS-side-ECU |
| 340, 340A | EPS-side-ECU |
| 141 | torque control section |
| 142 | switching section |
| 143 | motor driving section |
| 150 | motor |
| 151 | rotation sensor |
| 152 | steering angle sensor |
| 201, 201X, 201Y, 201Z | steering angle control section |
| 202, 202X, 202Y, 202Z | steering angle control section |
| 203, 203X, 203Y, 203Z | steering angle control section |
| 211 | rate limiter |
| 212 | steering wheel vibration eliminating section |
| 213A, 213B, 213C | subtracting section |
| 213D, 213E, 213F | adding section |
| 214 | position control section |
| 215 | velocity control section |
| 215a | integrating section (gain Kiv) |

| 215b | proportional section (Kpv) |
| 216 | steering wheel damping section |
| 217 | limiter |
| 218 | motor velocity command FF filter |
| 220 | stabilization compensating section |
| 311 | rate limiter |
| 312 | steering wheel vibration eliminating section |
| 313a, 313b, 313c, 313d | subtracting section |
| 313e | adding section |
| 314 | proportional section (Kpp) |
| 315a | integrating section (gain Kiv) |
| 315b | proportional section (Kpv) |
| 316 | motor torque converting section (Kt) |
| 317 | torsion bar section |
| 318a | column inertia section |
| 318b | integrating section (1/s) |
| 319 | differentiating section (s) |
| 320a | delay section |
| 320b | steering wheel inertia section |
| 320c | integrating section |

**Claims**

1. An electric power steering apparatus that has an automatic steering mode of controlling a motor depending on a target steering angle given by a vehicle when said vehicle autonomously travels by using a steering section for steering a steering system of said vehicle, comprising:

   a steering angle control section that calculates a first motor current command value based on said target steering angle, a first steering state signal, a second steering state signal and a third steering state signal;
   wherein said steering angle control section comprises
   a position control section that outputs a motor velocity command value based on said first steering state signal and said target steering angle,
   a velocity control section that outputs a second motor current command value based on said motor velocity command value and said second steering state signal,
   a stabilization compensating section that outputs a third motor current command value based on said third steering state signal, and
   a first adding section that inputs said second motor current command value and said third motor current command value, and outputs a first addition value, and
   outputs said first motor current command value based on said first addition value.

2. The electric power steering apparatus according to claim 1,
   wherein said first steering state signal is an actual steering angle, said second steering state signal is a motor angular velocity of said motor, and said third steering state signal is a motor angular velocity.

3. The electric power steering apparatus according to claim 1,
   wherein said first steering state signal is a steering wheel angle, said second steering state signal is a motor angular velocity of said motor, and said third steering state signal is a twist torque signal.

4. The electric power steering apparatus according to claim 1,
   wherein said first steering state signal is an actual steering angle, said second steering state signal is a motor angular velocity of said motor, and said third steering state signal is a column angle.

5. The electric power steering apparatus according to any one of claims 2 to 4,
   wherein said position control section multiplies a deviation between said first steering state signal and said target steering angle by a deviation gain, and outputs said motor velocity command value.

6. The electric power steering apparatus according to any one of claims 1 to 5,

wherein said velocity control section adds an integral gain value obtained by integrating and multiplying a steering angular velocity deviation between said motor velocity command value and said second steering state signal by an integral gain, and a proportional gain value obtained by multiplying said steering angular velocity deviation by a proportional gain, and outputs said second motor velocity command value.

7. The electric power steering apparatus according to any one of claims 1 to 6,
wherein an output limiter that limits an upper limit value and a lower limit value is provided at a final stage of said steering angle control section, and said output limiter outputs said first motor current command value.

8. The electric power steering apparatus according to any one of claims 1 to 7,
wherein said steering angle control section further comprises
a motor velocity command feedforward filter section that performs feedforward processing based on said target steering angle, and outputs a feedforward motor angular velocity command value, and
a second adding section that adds an output from said position control section and said feedforward motor angular velocity command value, and outputs said motor velocity command value to said velocity control section.

9. The electric power steering apparatus according to any one of claims 1 to 8,
wherein said steering angle control section further comprises a rate limiter that gradually changes an output value with respect to said target steering angle at a predetermined period so as to match said output value with said target steering angle.

10. The electric power steering apparatus according to any one of claims 1 to 9,
wherein said steering angle control section further comprises a steering wheel vibration eliminating section that outputs a signal obtained by cutting off a frequency component near a predetermined center frequency in said target steering angle, to said position control section.

11. The electric power steering apparatus according to any one of claims 1 to 10,
wherein said steering wheel vibration eliminating section cuts off a frequency component in a predetermined first cutoff frequency or less from said third steering state signal.

12. The electric power steering apparatus according to any one of claims 1 to 11,
wherein said steering angle control section further comprises a steering wheel damping section that outputs a fourth current command value in a predetermined second cutoff frequency or more based on a twist torque signal, and inputs said fourth motor current command value into said first adding section.

13. The electric power steering apparatus according to claim 10,
wherein said predetermined center frequency is a frequency of a vibration caused by springiness of a torsion bar and an inertia moment of a steering wheel in said automatic steering mode.

14. The electric power steering apparatus according to claim 12,
wherein said predetermined second cutoff frequency is a frequency of a vibration caused by springiness of a torsion bar and an inertia moment of a steering wheel in said automatic steering mode.

15. The electric power steering apparatus according to any one of claims 1 to 14,
wherein said stabilization compensating section includes a primary filter or a quadratic filter that performs filtering processing to said third steering state signal.

# FIG.1

**PRIOR ART**

## FIG.2

1 STEERING WHEEL

21 HALL IC SENSOR — 2A

AS_IS ANGLE

$\theta_n$ (296° PERIOD)

22 20° ROTOR SENSOR

COLUMN-INPUT-SIDE ANGEL SIGNAL

$\theta_{h1}$ (20° PERIOD)

23 TORSION BAR

24 40° ROTOR SENSOR

COLUMN-OUTPUT-SIDE ANGLE SIGNAL

$\theta_{c1}$ (40° PERIOD)

20 MOTOR

50

STEERING ANGLE

3 REDUCTION GEARS

2B

STEERING
ANGLE
CALCULATING
SECTION

$\theta_{hd}$ (STEERING WHEEL ANGLE)

$\theta_c$ (COLUMN ANGLE)

STEERING ANGLE

## PRIOR ART

FIG.3

STEERING WHEEL 1

STEERING WHEEL ANGLE $\theta_{hd}$

TORSION BAR TWIST ANGLE $\Delta\theta$

TORSION BAR 23
(SPRING CONSTANT : k , DAMPER COEFFICIENT : c)

COLUMN ANGLE $\theta_c$

PRIOR ART

# FIG.4

FIG.5

EP 3 640 118 A1

FIG.6

FIG.7

## FIG.8

## FIG.9

# FIG.10

VEHICLE-SIDE-ECU 130

EPS-SIDE -ECU 240

TORQUE SENSOR 154

TORQUE CONTROL SECTION 141

Th

Itref

SWITCHING SECTION 142

MOTOR DRIVING SECTION 143

M 150

BUTTON, SWITCH, etc.

SWITCHING COMMAND SECTION 131

SW

Iref
MOTOR CURRENT COMMAND VALUE

ROTATION SENSOR 151

CAMERA, etc.

TARGET STEERING ANGLE GENERATING SECTION 132

$\theta_{ref}$  TARGET STEERING ANGLE

STEERING ANGLE CONTROL SECTION 202

TORSION BAR TORQUE Tt

Tt  TORSION BAR TORQUE

Imref

STEERING ANGLE SENSOR 152

$\theta$ hd  STEERING WHEEL ANGLE

MOTOR ANGULAR VELOCITY CALCULATING SECTION 144

$\omega$c  MOTOR ANGULAR VELOCITY

$\theta$ s

EP 3 640 118 A1

# FIG.11

EP 3 640 118 A1

# FIG.12

VEHICLE-SIDE-ECU 130

EPS-SIDE-ECU 340

BUTTON, SWITCH, etc.

SWITCHING COMMAND SECTION 131

TORQUE SENSOR 154

TORQUE CONTROL SECTION 141

Itref

SWITCHING SECTION 142

MOTOR DRIVING SECTION 143

M 150

SW

Iref
MOTOR CURRENT
COMMAND VALUE

CAMERA, etc.

TARGET STEERING ANGLE GENERATING SECTION 132

$\theta_{ref}$ TARGET STEERING ANGLE

$\theta h$ ACTUAL STEERING ANGLE

STEERING ANGLE CONTROL SECTION 203

Imref

ROTATION SENSOR 151

STEERING ANGLE CALCULATING SECTION 50

$\theta c$ COLUMN ANGLE

MOTOR ANGULAR VELOCITY CALCULATING SECTION 144

MOTOR ANGULAR VELOCITY

$\omega c$

$\theta s$

EP 3 640 118 A1

**FIG.13**

FIG.14

EP 3 640 118 A1

# FIG.15

BODE DIAGRAM

12. 5[Hz]

31

FIG.16

FIG.17

BODE DIAGRAM

12. 5[Hz]

## FIG.18

(A) WITHOUT STEERING WHEEL VIBRATION ELIMINATING SECTION
(B) WITH STEERING WHEEL VIBRATION ELIMINATING SECTION

## FIG.19

**FIG.20**

EP 3 640 118 A1

## FIG.21

# FIG.22

**FIG.23**

# FIG.24

FIG.25

## FIG.26

## FIG.27

## FIG.28

(A) TIME RESPONSE OF TARGET STEERING ANGLE
(B) TIME RESPONSE OF ACTUAL STEERING ANGLE $\theta$ h
    WITH STEERING WHEEL VIBRATION ELIMINATING SECTION
(C) TIME RESPONSE OF ACTUAL STEERING ANGLE $\theta$ h
    WITH BOTH STEERING WHEEL DAMPING SECTION AND
    STEERING WHEEL VIBRATION ELIMINATING SECTION

## FIG.29

(A) THIN LINE
(B) DOTTED LINE
(C) THICK LINE

(A) WITHOUT STEERING WHEEL VIBRATION ELIMINATING SECTION
(B) WITH STEERING WHEEL VIBRATION ELIMINATING SECTION
(C) WITH BOTH STEERING WHEEL DAMPING SECTION AND
    STEERING WHEEL VIBRATION ELIMINATING SECTION

# FIG.30

VEHICLE-SIDE-ECU 130

EPS-SIDE-ECU 140A

154
TORQUE SENSOR
Th

141
TORQUE CONTROL SECTION
Itref

142
SWITCHING SECTION

143
MOTOR DRIVING SECTION

150
M

151
ROTATION SENSOR

131
BUTTON, SWITCH, etc. → SWITCHING COMMAND SECTION
SW

Iref
MOTOR CURRENT COMMAND VALUE

132
CAMERA, etc. → TARGET STEERING ANGLE GENERATING SECTION
$\theta_{ref}$ TARGET STEERING ANGLE

202Y
STEERING ANGLE CONTROL SECTION
Imref

152
STEERING ANGLE SENSOR

$\theta_{hd}$ STEERING WHEEL ANGLE

$T_t$ TORSION BAR TORQUE

$\omega c$ MOTOR ANGULAR VELOCITY

144
MOTOR ANGULAR VELOCITY CALCULATING SECTION

$\theta s$

EP 3 640 118 A1

43

# FIG.31

TARGET STEERING ANGLE $\theta_{ref}$

STEERING WHEEL ANGLE $\theta$hd

MOTOR ANGULAR VELOCITY $\omega$c

TORSION BAR TORQUE Tt

211 RATE LIMITER

212 STEERING WHEEL VIBRATION ELIMINATING SECTION

202Y

213A

$\theta$ta  $\theta$b

214 POSITION CONTROL SECTION  Kpp

MOTOR VELOCITY COMMAND VALUE $\omega$ref

215 VELOCITY CONTROL SECTION

213B

$\omega$c  Df

213C

215a INTEGRATING SECTION Kiv/s

215b PROPORTIONAL SECTION Kpv

213D  213E

217 LIMITER

MOTOR CURRENT COMMAND VALUE Imref

220 STABILIZATION COMPENSATING SECTION

216 STEERING WHEEL DAMPING SECTION

EP 3 640 118 A1

**FIG.32**

**FIG.33**

EP 3 640 118 A1

# FIG.34

**FIG.35**

# FIG.36

**FIG.37**

**INTERNATIONAL SEARCH REPORT**

| | International application No. |
|---|---|
| | PCT/JP2018/038054 |

A. CLASSIFICATION OF SUBJECT MATTER
Int.Cl. B62D6/00(2006.01)i, B62D5/04(2006.01)i

According to International Patent Classification (IPC) or to both national classification and IPC

B. FIELDS SEARCHED

Minimum documentation searched (classification system followed by classification symbols)
Int.Cl. B62D6/00, B62D5/04

Documentation searched other than minimum documentation to the extent that such documents are included in the fields searched
Published examined utility model applications of Japan     1922-1996
Published unexamined utility model applications of Japan   1971-2018
Registered utility model specifications of Japan           1996-2018
Published registered utility model applications of Japan   1994-2018

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | WO 2017/150445 A1 (NSK LTD.) 08 September 2017, paragraphs [0002]-[0083], fig. 1-26 & EP 3378734 A1, paragraphs [0002]-[0084], fig. 1-26 | 1-15 |
| Y | JP 2015-003550 A (DENSO CORP.) 08 January 2015, paragraphs [0013]-[0071], fig. 1-9 (Family: none) | 1-15 |
| A | JP 2016-210225 A (DENSO CORP.) 15 December 2016, entire text, all drawings & US 2018/0118253 A1, entire text, all drawings & WO 2016/17 4829 A1 & DE 112016001949 T & CN 107531279 A | 1-15 |
| A | JP 2017-016317 A (DENSO CORP.) 19 January 2017, entire text, all drawings (Family: none) | 1-15 |
| A | WO 2017/164105 A1 (NSK LTD.) 28 September 2017, entire text, all drawings (Family: none) | 1-15 |

☐ Further documents are listed in the continuation of Box C.   ☐ See patent family annex.

\* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 06 December 2018 (06.12.2018) | 18 December 2018 (18.12.2018) |

| Name and mailing address of the ISA/ | Authorized officer |
|---|---|
| Japan Patent Office 3-4-3, Kasumigaseki, Chiyoda-ku, Tokyo 100-8915, Japan | Telephone No. |

Form PCT/ISA/210 (second sheet) (January 2015)

**REFERENCES CITED IN THE DESCRIPTION**

**Patent documents cited in the description**

- JP 2003341543 A
- JP 2013252729 A
- JP 2014054885 A